# EUROPEAN PATENT SPECIFICATION

(11) **EP 2 763 275 B1**
(45) Date of publication and mention of the grant of the patent: **02.10.2019**
(21) Application number: 14153180.6
(22) Date of filing: 30.01.2014
(51) Int. Cl.: H02J 7/00

(54) **Monitor and control module and method**
Monitor und Steuermodul und Verfahren
Module de commande, moniteur et procédé

(30) Priority: 30.01.2013 US 201313753832
(43) Date of publication of application: 06.08.2014
(73) Proprietor: Semiconductor Components Industries, LLC, Phoenix, AZ 85008 (US)
(72) Inventor: De Cock, Bart, 3150 Wespelaar (Haacht) (BE); Gentinne, Bernard, 1160 Auderghem (Bruxelles) (BE)
(74) Representative: Manitz Finsterwald Patent- und Rechtsanwaltspartnerschaft mbB

(56) References cited:
- JP-A- 2001 231 178
- US-A1- 2008 185 994
- US-A1- 2012 161 707

## Description

The present invention relates, in general, to electronics and, more particularly, to methods of forming semiconductor devices and structure.

Power storage units are used in many applications including automotive, aerospace, airline, nautical, computer, communications, heavy equipment, remote sensing, etc. The power storage units may serve as a power supply or a battery that provides a particular rated voltage to drive an electrical load. The power storage units may be comprised of a number of individual battery cells that are connected in parallel or in series. The lifetime of the battery is strongly dependent on the way in which the battery is charged and discharged and will be reduced by over-charging the cells or over-discharging the cells. In addition, it is desirable to keep all the cells of a battery stack at the same capacity. This corresponds to keeping all the cells at about the same open circuit voltage. Use of the battery and over-discharge of one cell will impact the lifetime of that cell and of the battery. Battery manufacturers are constantly striving to find better and more accurate measurement techniques for measuring the voltage across battery cells. Along with improving measurement techniques, battery manufacturers are searching for ways to balance the cell voltages within a battery stack.

US-A-2012/161707 concerns a system for balancing a battery pack. A voltage sensing and balancing circuit is configured to measure a voltage of each battery cell and provide a balancing current path for each cell. When a voltage change, during charging or discharging of a cell, is more than a threshold, a control unit controls a cell balancing unit to perform a cell balancing operation. JP-A-2001/231178 concerns a battery controller comprising a circuit for detecting the voltage of each of a plurality of secondary batteries, and circuits, connected in parallel with respective secondary batteries, for regulating the capacity thereof. US-A-2008/185994 concerns a system for balancing a plurality of electrically coupled battery units. The system implements low loss charge balancing circuits, which may be incorporated within each battery unit.

It would be advantageous to provide a circuit and a method which address the aforementioned drawbacks of the prior art. Accordingly, a monitor and control circuit is provided as set out in the appended claims.

The present invention will be better understood from a reading of the following detailed description, taken in conjunction with the accompanying drawing figures, in which like reference characters designate like elements and in which:
FIG. 1 is a block diagram of a portion of a battery monitoring and balancing system in accordance with an embodiment of the present invention;
FIG. 2 is a block diagram of a portion of a battery monitoring and balancing system in accordance with another embodiment of the present invention;
FIG. 3 is a schematic diagram of a portion of a battery monitoring and balancing system in accordance with another embodiment of the present invention;
FIG. 4 is a schematic diagram of a portion of a battery monitoring and balancing system in accordance with another embodiment of the present invention;
FIG. 5 a schematic diagram of a portion of a battery monitoring and balancing system in accordance with another embodiment of the present invention;
FIG. 6 is a schematic diagram of a portion of a battery monitoring and balancing system in accordance with another embodiment of the present invention;
FIG. 7 is a schematic diagram of a portion of a battery monitoring and balancing system in accordance with another embodiment of the present invention;
FIG. 8 is a schematic diagram of a portion of a battery monitoring and balancing system in accordance with another embodiment of the present invention;
FIG. 9 is a schematic diagram of a portion of a battery monitoring and balancing system in accordance with another embodiment of the present invention;
FIG. 10 is a schematic diagram of a portion of a battery monitoring and balancing system in accordance with another embodiment of the present invention;
FIG. 11 is a schematic diagram of a portion of a battery monitoring and balancing system in accordance with another embodiment of the present invention;
FIG. 12 is a schematic diagram of a portion of a battery monitoring and balancing system in accordance with another embodiment of the present invention;
FIG. 13 is a schematic diagram of a portion of a battery monitoring and balancing system in accordance with another embodiment of the present invention;
FIG. 14 is a schematic diagram of a portion of a battery monitoring and balancing system in accordance with another embodiment of the present invention;
FIG. 15 is a schematic diagram of a portion of a battery monitoring and balancing system in accordance with another embodiment of the present invention;
FIG. 16 is a schematic diagram of a portion of a battery monitoring and balancing system in accordance with another embodiment of the present invention;
FIG. 17 is a schematic diagram of a portion of a battery monitoring and balancing system in accordance with another embodiment of the present invention;
FIG. 18 is a schematic diagram of a portion of a battery monitoring and balancing system in accordance with another embodiment of the present invention;
FIG. 19 is a schematic diagram of a portion of a battery monitoring and balancing system in accordance with another embodiment of the present invention;
FIG. 20 is a schematic diagram of a portion of a battery monitoring and balancing system in accordance with another embodiment of the present invention;
FIG. 21 is a schematic diagram of a portion of a battery monitoring and balancing system in accordance with another embodiment of the present invention;
FIG. 22 is a schematic diagram of a portion of a battery monitoring and balancing system in accordance with another embodiment of the present invention;
FIG. 23 is a schematic diagram of a portion of a battery monitoring and balancing system in accordance with another embodiment of the present invention; and
FIG. 24 is a schematic diagram of a portion of a battery monitoring and balancing system in accordance with another embodiment of the present invention.

For simplicity and clarity of illustration, elements in the figures are not necessarily to scale, and the same reference characters in different figures denote the same elements. Additionally, descriptions and details of well-known steps and elements are omitted for simplicity of the description. As used herein current carrying electrode means an element of a device that carries current through the device such as a source or a drain of an MOS transistor or an emitter or a collector of a bipolar transistor or a cathode or an anode of a diode, and a control electrode means an element of the device that controls current flow through the device such as a gate of an MOS transistor or a base of a bipolar transistor. Although the devices are explained herein as certain n-channel or p-channel devices, or certain n-type or p-type doped regions, a person skilled in the art will appreciate that complementary devices are also possible in accordance with embodiments of the present invention. It will be appreciated by those skilled in the art that the words during, while, and when as used herein are not exact terms that mean an action takes place instantly upon an initiating action but that there may be some small but reasonable delay, such as a propagation delay, between the reaction that is initiated by the initial action and the initial action. The use of the words approximately, about, or substantially means that a value of an element has a parameter that is expected to be very close to a stated value or position. However, as is well known in the art there are always minor variances that prevent the values or positions from being exactly as stated. It is well established in the art that variances of up to about ten per cent (10%) (and up to twenty per cent (20%) for semiconductor doping concentrations) are regarded as reasonable variances from the ideal goal of exactly as described.

It should be noted that a logic zero voltage level (V_{L}) is also referred to as a logic low voltage or logic low voltage level and that the voltage level of a logic zero voltage is a function of the power supply voltage and the type of logic family. For example, in a Complementary Metal Oxide Semiconductor (CMOS) logic family a logic zero voltage may be thirty percent of the power supply voltage level. In a five volt Transistor-Transistor Logic (TTL) system a logic zero voltage level may be about 0.8 volts, whereas for a five volt CMOS system, the logic zero voltage level may be about 1.5 volts. A logic one voltage level (V_{H}) is also referred to as a logic high voltage level, a logic high voltage, or a logic one voltage and, like the logic zero voltage level, the logic high voltage level also may be a function of the power supply and the type of logic family. For example, in a CMOS system a logic one voltage may be about seventy percent of the power supply voltage level. In a five volt TTL system a logic one voltage may be about 2.4 volts, whereas for a five volt CMOS system, the logic one voltage may be about 3.5 volts.

Generally, the present invention provides a module and a method for, among other things, balancing a voltage of a component such as, for example, a component comprising one or more power cells. In accordance with an embodiment of the present invention, an interface circuit is operated in an operating mode to monitor a voltage of a first component, operated in another operating mode to sample the voltage of the first component, and operated in yet another operating mode to balance the voltage of the first component.

In accordance with various embodiments, the module includes a monolithically integrated interface or switching network and elements such as, for example, a transistor and a resistor, or a resistor that are monolithically integrated with the interface or switching network to accomplish balancing.

In accordance with another embodiment of the present invention, a method for interfacing with one or more power cells is provided that comprises monitoring a voltage of a first power cell of the one or more power cells in response to configuring a first switching element in a first switching element configuration and a second switching element in a second switching element configuration, generating a sampled voltage from the first power cell and holding the sampled voltage in response to the first switching element being in the second switching element configuration and the second switching element being in the second switching element configuration, and balancing the voltage of the first power cell in response to the second switching element being in the first switching element configuration.

In accordance with another embodiment, a module is provided that comprises a first switching network having first, second, and third terminals, a first energy storage element coupled between the first and second terminals of the first switching network, a first impedance element coupled to the first terminal of the first switching network, and a second impedance element coupled to the third terminal of the first switching network.

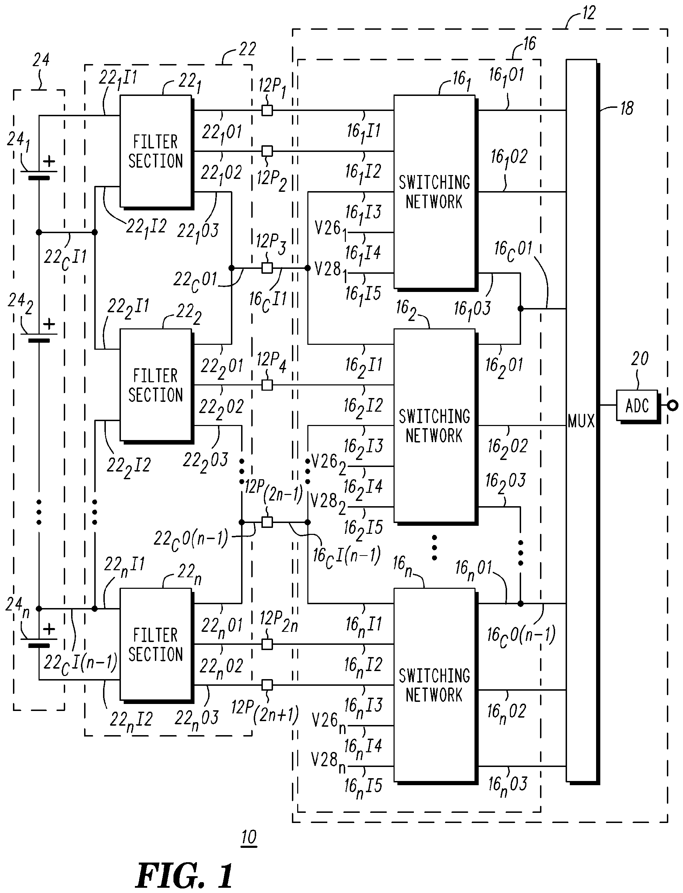

FIG. 1 is a block diagram of a power cell monitor and control circuit 10 comprising a control module 12 connected to a filter circuit 22. Power cell monitor and control circuit 10 is connected to a power storage unit 24. Control module 12 includes an interface network 16 having inputs that are connected to or, alternatively, that serve as inputs of control module 12 and outputs that are connected to the inputs of a multiplexer (MUX) 18, which has an output connected to an analog-to-digital converter (ADC) 20. Power storage unit 24 may be comprised of a plurality of power cells 24₁, 24₂,..., 24ₙ, which are connected to corresponding filter sections 22₁, 22₂,..., 22ₙ, respectively, of control circuit 10. Alternatively, the power storage units may be comprised of capacitors, fuel cells, batteries, or the like. Interface network 16 may be comprised of a plurality of switching elements 16₁, 16₂,..., 16ₙ, where switching element 16₁ has input terminals 16₁I1, 16₁I2, 16₁I3, 16₁I4, and 16₁I5 and output terminals 16₁O1, 16₁O2, and 16₁O3; switching element 16₂ has input terminals 16₂I1, 16₂I2, 16₂I3, 16₂I4, and 16₂I5 and output terminals 16₂O1, 16₂O2, and 16₂O3; and switching element 16ₙ has input terminals 16ₙI1, 16ₙI2, 16ₙI3, 16ₙI4, and 16ₙI5 and output terminals 16ₙO1, 16ₙO2, and 16ₙO3. In accordance with an embodiment, input terminal 16₁I3 is connected to input terminal 16₂I1 to form an input terminal 16_{C}Il and input terminal 16₍ₙ₋₁₎I3 is connected to an input terminal 16ₙI1 to form an input terminal 16_{C}I(n-1); output terminal 16₁O3 is connected to output terminal 16₂O1 to form an output terminal 16_{c}O1 and output terminal 16₍ₙ₋₁₎O3 is connected to output terminal 16ₙO1 to form an output terminal 16_{C}O(n-1). It should be noted that the subscript "n" represents an integer.

In accordance with another embodiment, control module 12 is a monolithically integrated semiconductor device in a semiconductor package having input pins or leads 12P₁, 12P₂, 12P₃, 12P₄, ..., 12P₍₂ₙ₋₁₎, 12P₂ₙ, and 12P₍₂ₙ₊₁₎, wherein n represents an integer. By way of example, input terminals 16₁I1, 16₁I2, 16_{C}I1, 16₂I2, ..., 16_{C}I(n-1), 16ₙI2, and 16ₙI3 are connected to input pins 12P₁, 12P₂, 12P₃, 12P₄, ..., 12P₍₂ₙ₋₁₎, 12P₂ₙ, and 12P₍₂ₙ₊₁₎, respectively. Although, input terminals 16₁I1, 16₁I2, 16_{C}I1, 16₂I2, ..., 16_{C}I(n-1), 16ₙI2, and 16ₙI3 are shown as being directly connected to input pins 12P₁, 12P₂, 12P₃, 12P₄, ..., 12P₍₂ₙ₋₁₎, 12P₂ₙ, and 12P₍₂ₙ₊₁₎, respectively, this is not a limitation of the present invention and they can be connected to each other through other circuit elements. Alternatively, input terminals 16₁I1, 16₁I2, 16_{C}I1, 16₂I2, ..., 16_{C}I(n-1), 16ₙI2, and 16ₙI3 may serve as input pins 12P₁, 12P₂, 12P₃, 12P₄, ..., 12P₍₂ₙ₋₁₎, 12P₂ₙ, and 12P₍₂ₙ₊₁₎, respectively.

In accordance with another embodiment, control module 12 and filter section 22 are monolithically integrated to form an integrated semiconductor device. In embodiments in which control module 12 and filter section 22 are monolithically integrated, input pins 12P₁, 12P₂, 12P₃, 12P₄, ..., 12P₍₂ₙ₋₁₎, 12P₂ₙ, and 12P₍₂ₙ₊₁₎, are absent and input terminals 22₁I1, 22_{C}I1, 22_{C}I(n-1), and 22ₙI2 serve as or, alternatively, are connected to input pins.

Input terminals 16₁I4 and 16₁I5 of switching element 16₁ are coupled for receiving control signals V26₁ and V28₁, respectively; input terminals 16₂I4 and 16₂I5 of switching element 16₂ are coupled for receiving control signals V26₂ and V28₂, respectively; and input terminals 16ₙI4 and 16ₙI5 of switching element 16ₙ are coupled for receiving control signals V26ₙ and V28ₙ, respectively.

Output terminals 16₁O1, 16₁O2, 16_{C}O1, 16₂O2, ..., 16_{C}O(n-1), 16ₙO2, and 16ₙO3 of switching elements 16₁, ..., 16ₙ are connected to corresponding input terminals of MUX 18.

Filter 22 is comprised of a plurality of filter sections 22₁, 22₂,..., 22ₙ, wherein each filter section includes input terminals connected to corresponding power cells of a power storage unit 24 and output terminals connected to corresponding input pins of interface network 16. Filter section 22₁ has input terminals 22₁I1 and 22₁I2 and output terminals 22₁O1, 22₁O2, and 22₁O3; filter section 22₂ has input terminals 22₂I1 and 22₂I2 and output terminals 22₂O1, 22₂O2, and 22₂O3; and filter section 22ₙ has input terminals 22ₙI1 and 22ₙI2 and output terminals 22ₙO1, 22ₙO2, and 22ₙO3. In accordance with an embodiment, input terminal 22₁I2 is connected to input terminal 22₂I1 to form an input terminal 22_{C}I1 and input terminal 22₍ₙ₋₁₎I2 is connected to input terminal 22ₙI1 to form an input terminal 22_{C}I(n-1). Output terminal 22₁03 is connected to output terminal 22₂01 to form an output terminal 22_{C}O1 and output terminal 22₍ₙ₋₁₎O3 is connected to output terminal 22ₙO1 to form an output terminal 22_{C}O(n-1). In accordance with embodiments in which control module 12 is a monolithically integrated semiconductor device and filter 22 is formed from discrete circuit elements, output terminals 22₁O1, 22₁O2, 22_{C}O1, 22₂O2, ..., 22_{C}O(n-1), 22ₙO2, 22ₙO3 are connected to input pins 12P₁, 12P₂, 12P₃, 12P₄, ..., 12P₍₂ₙ₋₁₎, 12P₂ₙ, and 12P₍₂ₙ₊₁₎, respectively.

Input terminal 22₁I1 is connected to the positive terminal of power cell 24₁ and input terminal 22_{C}I1 is connected to the negative and positive terminals of power cells 24₁ and 24₂, respectively. Input terminal 22_{C}I(n-1) is connected to the positive terminal of power cell 24ₙ. Input terminal 22ₙI2 is connected to the negative terminal of power cell 24ₙ.

It should be noted that the numbers of switching elements 16₁, 16₂,..., 16ₙ, filter sections 22₁, 22₂, ..., 22ₙ, and power cells 24₁, 24₂,..., 24ₙ, are not limitations of the present invention.

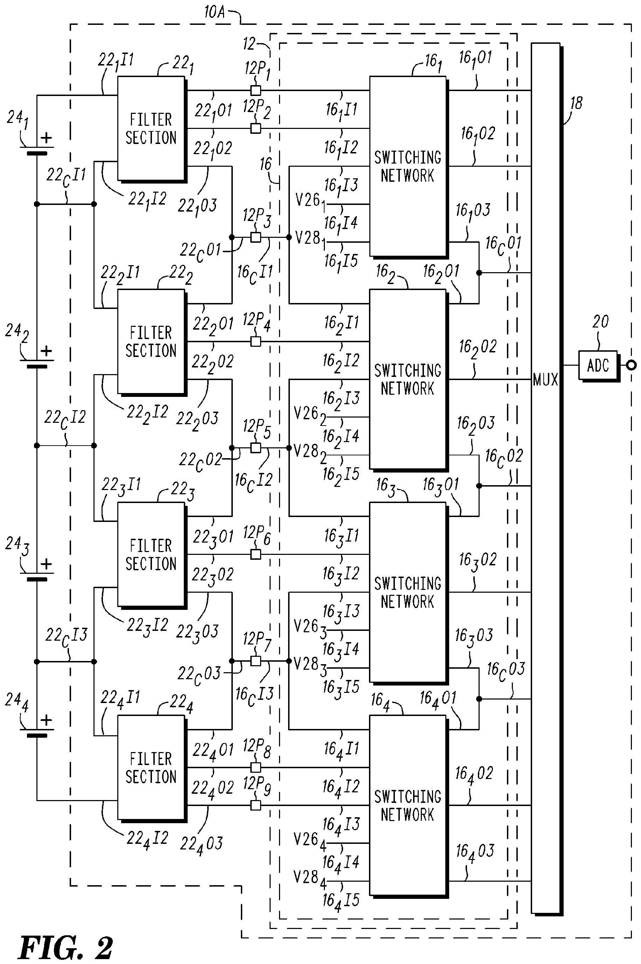

For the sake of completeness, FIG. 2 is included to illustrate a power cell monitor and control circuit 10A comprising four switching elements 16₁, 16₂, 16₃, and 16₄ connected to four filter sections 22₁, 22₂, 22₃, and 22₄, respectively. Thus, control circuit 10A is connected to four power storage units 24₁, 24₂, 24₃, and 24₄. Although four switching elements, four filter sections, and four power storage units are shown in FIG. 2, this is not a limitation of the present invention, i.e., there may be more than four or fewer than four switching elements, filter sections, and power storage units. More particularly, switching element 16₁ has input terminals 16₁I1, 16₁I2, 16₁I3, 16₁I4, and 16₁I5 and output terminals 16₁O1, 16₁O2, and 16₁O3; switching element 16₂ has input terminals 16₂I1, 16₂I2, 16₂I3, 16₂I4, and 16₂I5 and output terminals 16₂O1, 16₂O2, and 16₂O3; switching element 16₃ has input terminals 16₃I1, 16₃I2, 16₃I3, 16₃I4, and 16₃I5 and output terminals 16₃O1, 16₃O2, and 16₃O3; and switching element 16₄ has input terminals 16₄I1, 16₄I2, 16₄I3, 16₄I4, and 16₄I5 and output terminals 16₄O1, 16₄O2, and 16₄O3. In accordance with an embodiment, input terminal 16₁I3 may be connected to input terminal 16₂I1 to form an input terminal 16_{C}I1, input terminal 16₂I3 may be connected to input terminal 16₃I1 to form an input terminal 16_{c}I2 and input terminal 16₃I3 is connected an input terminal 16₄I1 to form an input terminal 16_{c}I3, output terminal 16₁O3 may be connected to output terminal 16₂O1 to form an output terminal 16_{C}O1, output terminal 16₂O3 may be connected to output terminal 16₃O1 to form an output terminal 16_{c}O2, and output terminal 16₃O3 may be connected to output terminal 16₄O1 to form an output terminal 16_{C}O3.

Input terminals 16₁I4 and 16₁I5 of switching element 16₁ are coupled for receiving control signals V26₁ and V28₁, respectively; input terminals 16₂I4 and 16₂I5 of switching element 16₂ are coupled for receiving control signals V26₂ and V28₂, respectively; input terminals 16₃I4 and 16₃I5 of switching element 16₃ are coupled for receiving control signals V26₃ and V28₃, respectively; and input terminals 16₄I4 and 16₄I5 of switching element 16₄ are coupled for receiving control signals V26₄ and V28₄, respectively.

Output terminals 16₁O1, 16₁O2, 16_{C}O1, 16₂O2, 16_{C}O2, 16₃O2, 16_{C}O3, 16₄O2, and 16₄O3 of switching elements 16₁, 16₂, 16₃, and 16₄, respectively, are connected to corresponding input terminals of MUX 18.

Filter 22 is comprised of a plurality of filter sections 22₁, 22₂, 22₃, and 22₄, wherein each filter section includes input terminals connected to corresponding power cells 24₁, 24₂, 24₃, and 24₄ of a power storage unit 24 and output terminals connected to corresponding input pins of switching elements of control module 12. Filter section 22₁ has input terminals 22₁I1 and 22₁I2 and output terminals 22₁O1, 22₁O2, and 22₁O3; filter section 22₂ has input terminals 22₂I1 and 22₂I2 and output terminals 22₂O1, 22₂O2, and 22₂O3; filter section 22₃ has input terminals 22₃I1 and 22₃I2 and output terminals 22₃O1, 22₃O2, and 22₃O3; and filter section 22₄ has input terminals 22₄I1 and 22₄I2 and output terminals 22₄O1, 22₄O2, and 22₄O3. In accordance with an embodiment, input terminal 22₁I2 is connected to input terminal 22₂I1 to form an input terminal 22_{C}I1, input terminal 22₂I2 is connected to input terminal 22₃I1 to form an input terminal 22_{C}I2, and input terminal 22₃I2 is connected to input terminal 22₄I1 to form an input terminal 22_{C}I3. Input terminal 22₁I1 is connected to the positive terminal of power cell 24₁ and input terminal 22_{C}I1 is connected to the negative and positive terminals of power cells 24₁ and 24₂, respectively. Input terminal 22_{C}I2 is connected to the negative and positive terminals of power cells 24₂ and 24₃, respectively. Input terminal 22_{C}I3 is connected to the negative and positive terminals of power cells 24₃ and 24₄, respectively. Input terminal 22₄I2 is connected to the negative terminal of power cell 24₄.

Output terminal 22₁03 may be connected to output terminal 22₂01 to form an output terminal 22_{C}O1, output terminal 22₂O3 may be connected to output terminal 22₃O1 to form an output terminal 22_{C}O2, and output terminal 22₃O3 may be connected to output terminal 22₄O1 to form an output terminal 22_{C}O3. Output terminal 22₁O1 is connected to input pin 12P₁; output terminal 22₁O2 is connected to input pin 12P₂; output terminal 22_{C}O1 is connected to input pin 12P₃; output terminal 22₂O2 is connected to input pin 12P₄; output terminal 22_{C}O2 is connected to input pin 12P₅; output terminal 22₃O2 is connected to input pin 12P₆; output terminal 22_{C}O3 is connected to input pin 12P₇; output terminal 22₄O2 is connected to input pin 12P₈; and output terminal 22₄O3 is connected to input pin 12P₉.

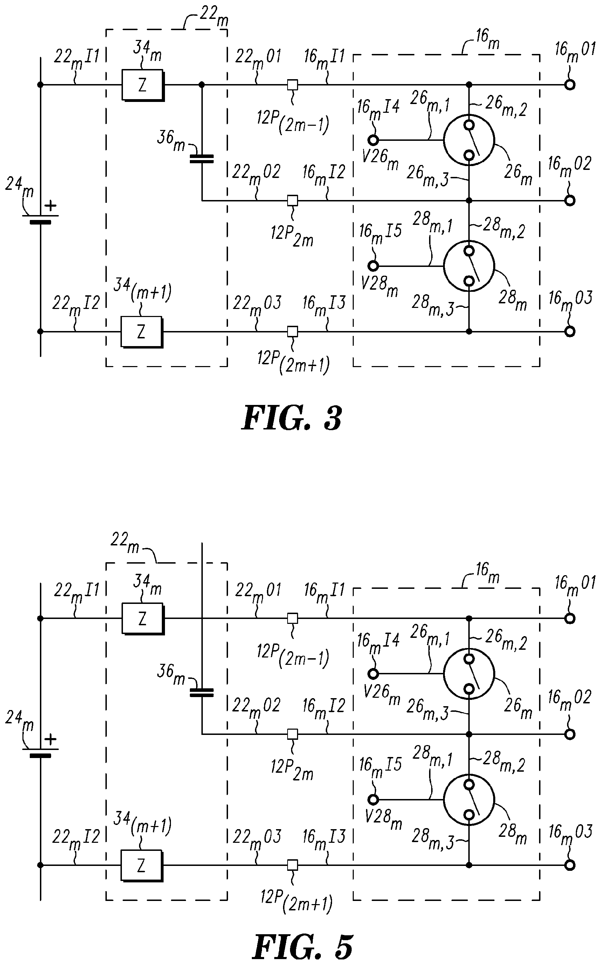

FIG. 3 is a circuit schematic of a switching element or section 16ₘ of interface network 16 (described with reference to FIGs. 1 and 2) connected to a power cell 24ₘ through a filter section 22ₘ in accordance with another embodiment of the present invention. It should be noted that switching elements 16₁, 16₂, ..., 16ₙ in FIG. 1 are comprised of switching elements 16ₘ and that the variable m is used to represent integers 1, 2, ..., n. For example, switching element 16₁ corresponds to switching element 16ₘ, where m is replaced by 1, switching element 16₂ corresponds to switching element 16ₘ, where m is replaced by 2, and switching element 16ₙ corresponds to switching element 16ₘ, where m is replaced by n. Similarly, switching elements 16₁, 16₂, 16₃, 16₄ in FIG. 2 are comprised of switching elements 16ₘ where the variable m is used to represent integers 1, 2, 3, and 4. For example, switching element 16₁ corresponds to switching element 16ₘ, where m is replaced by 1, switching element 16₂ corresponds to switching element 16ₘ, where m is replaced by 2, switching element 16₃ corresponds to switching element 16ₘ, where m is replaced by 3, and switching element 16₄ corresponds to switching element 16ₘ, where m is replaced by 4.

Switching section 16ₘ comprises switches 26ₘ and 28ₘ, wherein each switch 26ₘ and 28ₘ includes a control terminal and a pair of conduction terminals. Switch 26ₘ may be referred to as a current control element or a balancing switch and switch 28ₘ may be referred to as a sampling switch. More particularly, switch 26ₘ has a control terminal 26_{m,1}, a conduction terminal 26_{m,2}, and a conduction terminal 26_{m,3}. Conduction terminal 26_{m,2} is connected to input terminal 16ₘI1 and to output terminal 16ₘO1. It should be noted that conduction terminal 26_{m,2} may be connected to terminals 16ₘI1 and 16ₘO1 or, alternatively, terminals 16ₘI1 and 16ₘO1 may form an input/output terminal. Switch 28ₘ has a control terminal 28_{m,1}, a conduction terminal 28_{m,2}, and a conduction terminal 28_{m,3}. Conduction terminal 28_{m,2} is connected to conduction terminal 26_{m,3} and to terminals 16ₘI2 and 16ₘO2. Conduction terminal 28_{m,3} is connected to input terminal 16ₘI3 and to output terminal 16ₘO3. It should be noted that conduction terminal 28_{m,3} may be connected to terminals 16ₘI3 and 16ₘO3 or alternatively, terminals 16ₘI3 and 16ₘO3 may form an input/output terminal. It should be further noted that terminals 26_{m,1} correspond to terminals 16₁I4, 16₂I4, ..., 16ₙI4 of FIG. 1 and terminals 28_{m,1} correspond to terminals 16₁I5, 16₂I5, ..., 16ₙI5 of FIG. 1.

Filter section 22ₘ comprises an impedance element 34ₘ having a terminal connected to or, alternatively, serving as input terminal 22ₘI1 and a terminal connected to or, alternatively, serving as output terminal 22ₘO1. Output terminal 22ₘO1 may be connected to output terminal 22ₘO2 through an energy storage element 36ₘ. Input terminal 22ₘI2 may be connected to output terminal 22ₘO3 through an impedance element 34₍ₘ₊₁₎. By way of example, impedance elements 34ₘ and 34₍ₘ₊₁₎ are resistors and energy storage element 36ₘ is a capacitor. Because impedance elements 34ₘ and 34₍ₘ₊₁₎ are not limited to being resistors, they are represented by the symbol Z in FIG. 3. In accordance with embodiments in which switching section 16ₘ is a monolithically integrated semiconductor device or a portion of a monolithically integrated semiconductor device and circuit elements 34ₘ, 34₍ₘ₊₁₎, and 36ₘ are discrete circuit elements, circuit elements 34ₘ, 34₍ₘ₊₁₎, and 36ₘ are connected to switching section 16ₘ through input pins 12P₍₂ₘ₋₁₎, 12P₂ₘ, and 12P₍₂ₘ₊₁₎, i.e., output terminal 22ₘO1 is connected to input pin 12P₍₂ₘ₋₁₎, output terminal 22ₘO2 is connected to input pin 12P₂ₘ, and output terminal 22ₘO3 is connected to input pin 12P₍₂ₘ₊₁₎.

Power cell 24ₘ comprises a battery cell having a positive terminal connected to input terminal 22ₘI1 of filter section 22ₘ and a negative terminal connected to input terminal 22ₘI2 of filter section 22ₘ.

It should be noted that output terminal 22ₘO1 is electrically connected to input terminal 16ₘI1, output terminal 22ₘO2 is electrically connected to input terminal 16ₘI2, and output terminal 22ₘO3 is electrically connected to input terminal 16ₘI3.

Still referring to FIG. 3, switching sections 16ₘ operate in at least three different operating modes including a filtering continuous observation mode, a sample and hold mode, and a balancing mode. In the continuous observation operating mode, the voltage across power cell 24ₘ is monitored by configuring switching elements 26ₘ and 28ₘ to be opened or closed. For example, the voltage across power cell 24ₘ can be monitored by applying a control voltage V26ₘ to the control terminal of switching element 26ₘ that is suitable for opening switching element 26ₘ and applying a control voltage V28ₘ to the control terminal of switching element 28ₘ that is suitable for closing switching element 28ₘ thereby shorting output terminal 16ₘO2 to output terminal 16ₘO3.

Closing switching element 28ₘ shorts output terminal 16ₘO2 to output terminal 16ₘO3 and capacitor 36ₘ is substantially charged to the voltage of power cell 24ₘ, i.e., capacitor 36ₘ is charged to a voltage substantially equal to the voltage across power cell 24ₘ. The voltage across capacitor 36ₘ appears across output terminals 16ₘO1 and 16ₘO2. MUX 18 (shown in FIGs. 1 and 2) is configured to transmit the voltage at output terminals 16ₘO1 and 16ₘO2 to analog-to-digital converter 20. Thus, a voltage representing the filtered voltage of power cell 24ₘ is transmitted to ADC 20, thereby observing or monitoring the voltage across power cell 24ₘ.

In the sample and hold operating mode, the voltage across power cell 24ₘ can be sampled and stored or held by applying a control voltage V26ₘ to the control terminal of switching element 26ₘ that is suitable for opening switching element 26ₘ and a control voltage V28ₘ to the control terminal of switching element 28ₘ suitable for closing switching element 28ₘ thereby shorting output terminal 16ₘO2 to output terminal 16ₘO3. Capacitor 36ₘ is charged to a voltage substantially equal to the voltage across power cell 24ₘ, i.e., capacitor 36ₘ samples the voltage of power cell 24ₘ.

After sampling the voltage on power cell 24ₘ, the control voltage V26ₘ suitable for opening switching element 26ₘ is maintained at the control terminal of switching element 26ₘ and a control voltage V28ₘ suitable for opening switching element 28ₘ is applied to the control terminal of switching element 28ₘ. MUX 18 and ADC 20 (shown in FIGs. 1 and 2) are configured so that output terminals 16ₘO1 and 16ₘO2 are connected to a high impedance network. Thus, the sampled voltage appearing across capacitor 36ₘ is held. The voltage across capacitor 36ₘ appears across output terminals 16ₘO1 and 16ₘO2. MUX 18 is configured to transmit the voltage at output terminals 16ₘO1 and 16ₘO2 to analog-to-digital converter 20. Thus, a sampled voltage representing the voltage of power cell 24ₘ is transmitted to ADC 20.

In the balancing operating mode, the voltage across power cell 24ₘ can be balanced by applying a control voltage V26ₘ to the control terminal of switching element 26ₘ that is suitable for closing switching element 26ₘ and a control voltage V28ₘ to the control terminal of switching element 28ₘ that is suitable for closing switching element 28ₘ. Accordingly, a balancing current through impedance element 34ₘ, switching element 26ₘ, switching element 28ₘ, and impedance element 34₍ₘ₊₁₎ discharges power cell 24ₘ. Switching element 26ₘ may be referred to as a balancing switch or a switch and switching element 28ₘ may be referred to as a sampling switch or a switch.

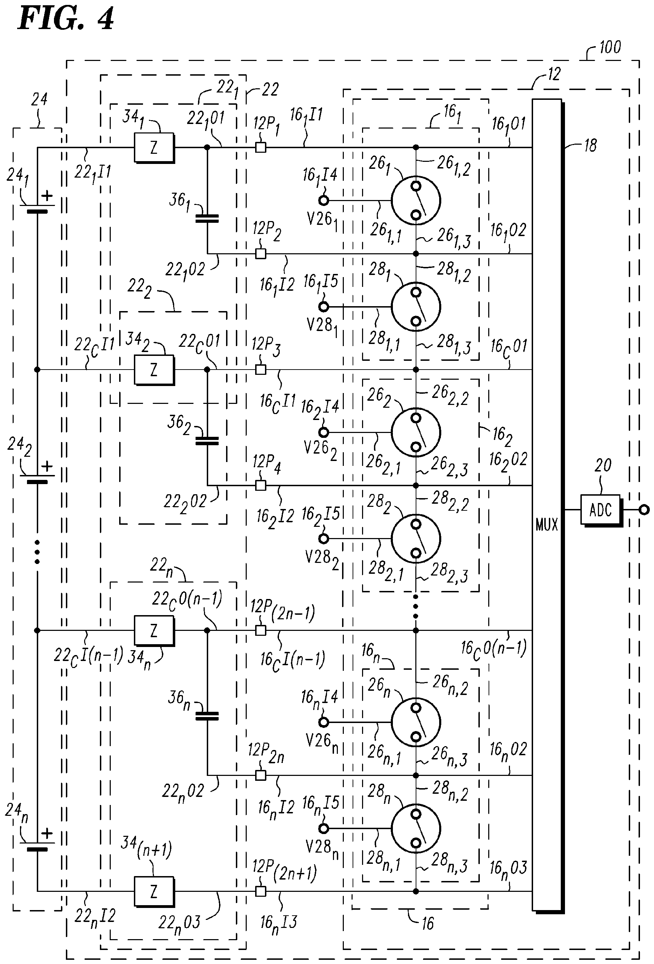

FIG. 4 is a block diagram of a power cell monitor and control circuit 100 comprising control module 12 and filter circuit 22 as described with reference to FIG. 1, but further including the embodiments of circuit implementations of filter circuit 22 and interface circuit 16 described with reference to FIG. 3. Similar to the embodiment of FIG. 1, switching networks 16₁, 16₂, ..., 16ₙ of interface network 16 shown in FIG. 4 are comprised of switching sections 16ₘ where the variable m is used to represent integers 1, 2, ..., n as described with reference to FIG. 3. For example, switching network 16₁ corresponds to switching section 16ₘ, where m is replaced by 1, switching network 16₂ corresponds to switching section 16ₘ, where m is replaced by 2, and switching network 16ₙ corresponds to switching section 16ₘ, where m is replaced by n.

Control circuit 100 is connected to a battery unit 24. As described above, control module 12 includes an interface network 16 having input terminals that are coupled to or, alternatively, that serve as inputs of control module 12 and output terminals that are coupled to the inputs of a multiplexer (MUX) 18, which has outputs connected to analog-to-digital converter (ADC) 20. Interface network 16 has been described with reference to FIGs. 1 and 3.

Filter 22 is comprised of a plurality of filter sections 22₁, 22₂ ..., 22ₙ, wherein each filter section includes input terminals connected to corresponding power cells 24₁, 24₂, ..., 24ₙ of a power storage unit 24 and output terminals connected to corresponding input terminals of switching networks 16₁, 16₂, ..., 16ₙ. Filter section 22₁ has input terminals 22₁I1 and 22_{C}I1 and output terminals 22₁O1, 22₁O2, and 22_{C}O1; filter section 22₂ has input terminals 22_{C}I1 and 22_{C}I2 and output terminals 22_{C}O1, 22₂O2, and 22_{C}O2; and filter section 22ₙ has input terminals 22_{C}I(n-1) and 22ₙI2 and output terminals 22_{C}O(n-1), 22ₙO2, and 22ₙO3.

Input terminal 22₁I1 is connected to the positive terminal of power cell 24₁ and input terminal 22_{C}I1 is connected to the negative and positive terminals of power cells 24₁ and 24₂, respectively. Input terminal 22_{C}I(n-1) is connected to the positive terminal of power cell 24ₙ and input terminal 22ₙI2 is connected to the negative terminal of power cell 24ₙ.

Filter section 22₁ comprises impedance elements 34₁ and 34₂ and an energy storage element 36₁. More particularly, output terminal 22₁O1 is connected to input terminal 22₁I1 through impedance element 34₁ and to output terminal 22₁O2 through energy storage element 36₁. Input terminal 22_{C}I1 is connected to output terminal 22_{C}O1 through impedance element 34₂. It should be noted that impedance element 34₂ is common to filter sections 22₁ and 22₂. By way of example, impedance elements 34₁ and 34₂ are resistors and energy storage element 36₁ is a capacitor.

Filter section 22₂ comprises impedance element 34₂ and energy storage element 36₂. More particularly, output terminal 22_{C}O1 is connected to input terminal 22_{C}I1 through impedance element 34₂ and to output terminal 22₂O2 through energy storage element 36₂. By way of example, energy storage element 36₂ is a capacitor. It should be noted that similar shared components and connections exist between filter section 22₂ and another filter section connected to filter section 22₂ as exist between filter section 22₁ and filter section 22₂. For the sake of clarity, not all components of filter section 22₂ are shown.

Filter section 22ₙ comprises impedance elements 34ₙ and 34₍ₙ₊₁₎ and energy storage element 36ₙ. More particularly, output terminal 22_{C}O(n-1) is connected to input terminal 22_{C}I(n-1) through impedance element 34ₙ and to output terminal 22ₙO2 through energy storage element 36ₙ. Output terminal 22_{C}O(n-1) is also connected to input pin 12P₍₂ₙ₋₁₎. Input terminal 22ₙI2 is connected to output terminal 22ₙO3 through impedance element 34₍ₙ₊₁₎. By way of example, impedance elements 34ₙ and 34₍ₙ₊₁₎ are resistors and energy storage element 36ₙ is a capacitor. Because impedance elements 34ₙ and 34₍ₙ₊₁₎ are not limited to being resistors, they are designated by the symbol Z in FIG. 4, i.e., they can be other types of impedance elements. Interface network 16 of FIG. 4 that is comprised of switching sections 16₁, 16₂, ..., 16ₙ operate in at least three different operating modes including a filtering continuous observation mode, a sample and hold mode, and a balancing mode. The operating modes of interface circuit 16 have been described with reference to FIG. 3.

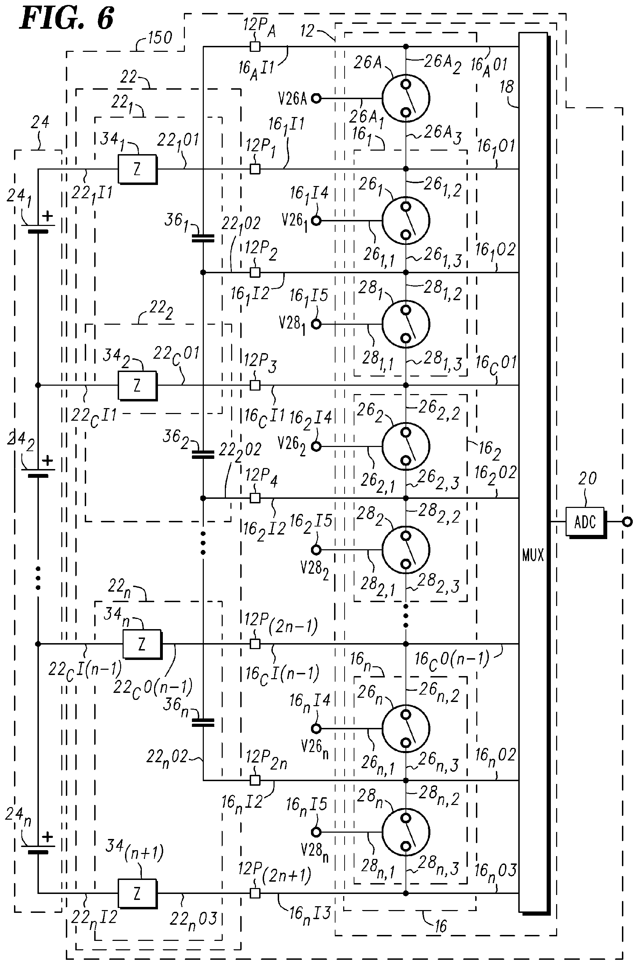

FIG. 5 is a circuit schematic of a switching section 16ₘ of interface network 16 (described with reference to FIGs. 1 and 2) connected to a power cell 24ₘ through a filter section 22ₘ in accordance with another embodiment of the present invention. It should be noted that switching networks 16₁, 16₂, ..., 16ₙ in FIG. 1 are comprised of switching sections 16ₘ and that the variable m is used to represent integers 1, 2, ..., n. For example, switching network 16₁ corresponds to switching section 16ₘ, where m is replaced by 1, switching network 16₂ corresponds to switching section 16ₘ, where m is replaced by 2, and switching network 16ₙ corresponds to switching section 16ₘ, where m is replaced by n. Switching section 16ₘ of FIG. 5 is similar to switching section 16ₘ of FIG. 3, except that one of the terminals of capacitor 36ₘ is not connected to input pin 12P₍₂ₘ₋₁₎. Thus, capacitor 36ₘ has a terminal connected to input pin 12P₂ₘ but its other terminal is shared with another circuit (shown in FIG. 6). As discussed with reference to FIG. 3, switching element 26ₘ may be referred to as a balancing switch or a switch and switching element 28ₘ may be referred to as a sampling switch or a switch.

FIG. 6 is a block diagram of a power cell monitor and control module 150 comprising control module 12 and filter circuit 22 as described with reference to FIG. 1, but further including embodiments of circuit implementations of filter circuit 22 and interface circuit 16 described with reference to FIG. 5. Control module 150 is connected to a battery unit 24. As described above, control module 12 includes an interface network 16 having input terminals that are connected to or, alternatively, that serve as inputs of control module 12 and output terminals that are connected to corresponding inputs of a multiplexer (MUX) 18, which has an output connected to an analog-to-digital converter (ADC) 20. Interface circuit 16 is comprised of switching sections 16₁, 16₂, ..., 16ₙ and a switching element 26A. Switching sections 16₁ 16₂, ..., 16ₙ have been described with reference to FIG. 4.

Switching element 26A has a control terminal 26A₁ coupled for receiving a control signal V26A, a conduction terminal 26A₂, and a conduction terminal 26A₃. Conduction terminal 26A₂ is connected to conduction terminal 16_{A}I1 and output terminal 16_{A}O1. Conduction terminal 26A₃ is connected to input terminal 16₁I1, output terminal 16₁O1, and to conduction terminal 26_{1,2}.

Output terminals 16_{A}O1, 16₁O1, 16₁O2, 16_{C}O1, 16₂O2, ..., 16_{C}O(n-1), 16ₙO2, 16ₙO3 are connected to corresponding input terminals of MUX 18.

Filter 22 is comprised of a plurality of filter sections 22₁, 22₂ ..., 22ₙ, wherein each filter section includes input terminals connected to corresponding power cells 24₁, 24₂, ..., 24ₙ of a power storage unit 24 and output terminals connected to corresponding input terminals of switching networks 16₁, 16₂, ..., 16ₙ. Filter section 22₁ has input terminals 22₁I1 and 22_{C}I1 and output terminals 22₁O1, 22₁O2, and 22_{C}O1; filter section 22₂ has input terminals 22_{C}I1 and 22_{C}I2 and output terminals 22_{C}O1, 22₂O2, and 22_{C}O2; and filter section 22ₙ has input terminals 22_{C}I(n-1) and 22ₙI2 and output terminals 22_{C}O(n-1), 22ₙO2, and 22ₙO3.

Input terminal 22₁I1 is connected to the positive terminal of power cell 24₁ and input terminal 22_{C}I1 is connected to the negative and positive terminals of power cells 24₁ and 24₂, respectively. Input terminal 22_{C}I(n-1) is connected to the positive terminal of power cell 24ₙ and input terminal 22ₙI2 is connected to the negative terminal of power cell 24ₙ.

Filter section 22₁ comprises impedance elements 34₁ and 34₂ and energy storage element 36₁, wherein energy storage element 36₁ has a terminal connected to input pin 12P_{A} and a terminal connected to input pin 12P₂. Output terminal 22₁O1 is connected to input pin 12P₁. Input terminal 22_{C}I1 is connected to output terminal 22_{C}O1 through impedance element 34₂. It should be noted that impedance element 34₂ is common to filter sections 22₁ and 22₂. By way of example, impedance elements 34₁ and 34₂ are resistors and energy storage element 36₁ is a capacitor.

Filter section 22₂ comprises impedance element 34₂ and energy storage element 36₂. Output terminal 22_{C}O1 is connected to input pin 12P₃. A terminal of energy storage element 36₂ is connected to input pin 12P₂ and the other terminal of capacitor 36₂ is connected to input pin 12P₄. By way of example, impedance element 34₂ is a resistor and energy storage element 36₂ is a capacitor. It should be noted that similar shared components and connections exist between filter section 22₂ and another filter section connected to filter section 22₂ as exist between filter section 22₁ and filter section 22₂. For the sake of clarity, not all components of filter section 22₂ are shown.

Filter section 22ₙ comprises impedance elements 34ₙ and 34₍ₙ₊₁₎ and energy storage element 36ₙ. Output terminal 22_{C}O(n-1) is connected to input pin 12P₍₂ₙ₋₁₎. Input terminal 22_{C}I(n-1) is connected to output terminal 22_{C}O(n-1) through impedance element 34ₙ and input terminal 22ₙI2 is connected to output terminal 22ₙO3 through impedance element 34₍ₙ₊₁₎. Output terminal 22ₙO3 is connected to input pin 12P₍₂ₙ₊₁₎. Energy storage element 36ₙ has a terminal connected to input pin 12P₂ₙ and has a terminal connected to an adjacent filter section. For example, in accordance with an embodiment in which there are three filter sections, index n of energy storage element 36ₙ is 3, i.e., energy storage element 36ₙ is identified by reference character 36₃ and has a terminal connected to a terminal of energy storage element 36₂ of filter section 22₂. By way of example, impedance elements 34ₙ and 34₍ₙ₊₁₎ are resistors and energy storage element 36ₙ is a capacitor. Because impedance elements 34₁, 34₂, ..., 34ₙ, 34₍ₙ₊₁₎ are not limited to being resistors, they are identified reference characters Z, i.e., they may be other types of impedance elements.

In accordance with another embodiment, the polarities of the cells are switched such that the cells have the opposite polarities shown FIGs. 1, 2, 4, and 6.

Still referring to FIG. 6, interface network 16, which comprises switching sections 16₁, ..., 16ₙ, operates in at least three different operating modes including a filtering continuous observation mode, a differential sample and hold mode, and an internal balancing mode. In the filtering continuous observation operating mode, the voltages across power cells 24₁, ..., 24ₙ are monitored by configuring switching elements 26₁, ..., 26ₙ to be opened and switching elements 28₁, ..., 28ₙ, and 26A to be closed. For example, the voltage across power cell 24₁ can be monitored in response to MUX 18 being configured to transmit the voltage at output terminals 16_{A}O1 and 16₁O2 to analog-to-digital converter 20. Thus, a voltage representing the filtered voltage of power cell 24₁ is transmitted to ADC 20, thereby observing or monitoring the voltage across power cell 24₁.

Similarly, the voltage across power cell 24₂ can be monitored in response to MUX 18 being configured to transmit the voltage at output terminals 16₁O2 and 16₂O2 to analog-to-digital converter 20. Thus, a voltage representing the voltage of power cell 24₂ is transmitted to ADC 20, thereby observing or monitoring the voltage across power cell 24₂.

The voltage across power cell 24ₙ can be monitored in response to MUX 18 being configured to transmit the voltage at output terminals 16₍ₙ₋₁₎O2 and 16ₙO2 to analog-to-digital converter 20. Thus, a voltage representing the voltage of power cell 24ₙ is transmitted to ADC 20, thereby observing or monitoring the voltage across power cell 24n.

In the differential sample and hold operating mode, the voltages across power cell 24₁, ..., 24ₙ can be sampled and stored or held by applying suitable control voltages V26A, V26₁, ..., V26ₙ, and V28₁, ..., V28ₙ to the control terminals of switching elements 26A, 26₁, ..., 26ₙ, and 28₁, ..., 28ₙ, respectively. For sampling, the switching elements are configured to enable the filtering continuous observation mode. In response to these switch configurations, capacitors 36₁, ..., 36ₙ are charged to voltages substantially equal to the voltages across power cell 24₁, ..., 24ₙ. Capacitors 36₁, ..., 36ₙ serve as filters and filter the sampled signals. It should be noted that the on-resistances (Rdson's) of switching elements 26A and 28₁, ..., 28ₙ are in series with both terminals of capacitors 36₁, ..., 36ₙ, which reduces issues associated with common mode noise.

After sampling the voltage of power cells 24₁, ..., 24ₙ, the information is held on capacitors 36₁, ..., 36ₙ by applying control signals V26A and V28₁, ..., V28ₙ to the control terminals of switching elements 26A and 28₁, ..., 28ₙ, respectively, that are suitable for opening these switching elements. The switching elements 26₁, ..., 26ₙ remain open, i.e., they keep the same state as in the filtering continuous observation mode. In response to this switching configuration, capacitors 36₁, ..., 36ₙ are isolated from the stack of power cells 24₁, ..., 24ₙ, thereby holding the voltages that appeared on power cells 24₁, ..., 24ₙ.

The sampled voltage representing the voltage of power cell 24₁ can be monitored in response to MUX 18 being configured to transmit the voltage at output terminals 16_{A}O1 and 16₁O2 to ADC 20.

In response to MUX 18 being configured to transmit the voltage at output terminals 16₁O2 and 16₂O2 to analog-to-digital converter 20 a sampled voltage representing the voltage of power cell 24₂ is transmitted to ADC 20.

In response to MUX 18 being configured to transmit the voltage at output terminals 16₍ₙ₋₁₎O2 and 16ₙO2 to analog-to-digital converter 20, a sampled voltage representing the voltage of power cell 24ₙ is transmitted to ADC 20.

In the internal balancing operating mode, the voltage across power cell 24₁ can be balanced by applying control signals V26₁ and V28₁ to the control terminals of switching elements 26₁ and 28₁, respectively that are suitable for closing switching elements 26₁ and 28₁. Accordingly, balancing current flowing through impedance element 34₁, switching element 26₁, switching element 28₁ and impedance element 34₂ discharges power cell 24₁

It should be noted that the voltages across the other power cells can be balanced using a similar technique.

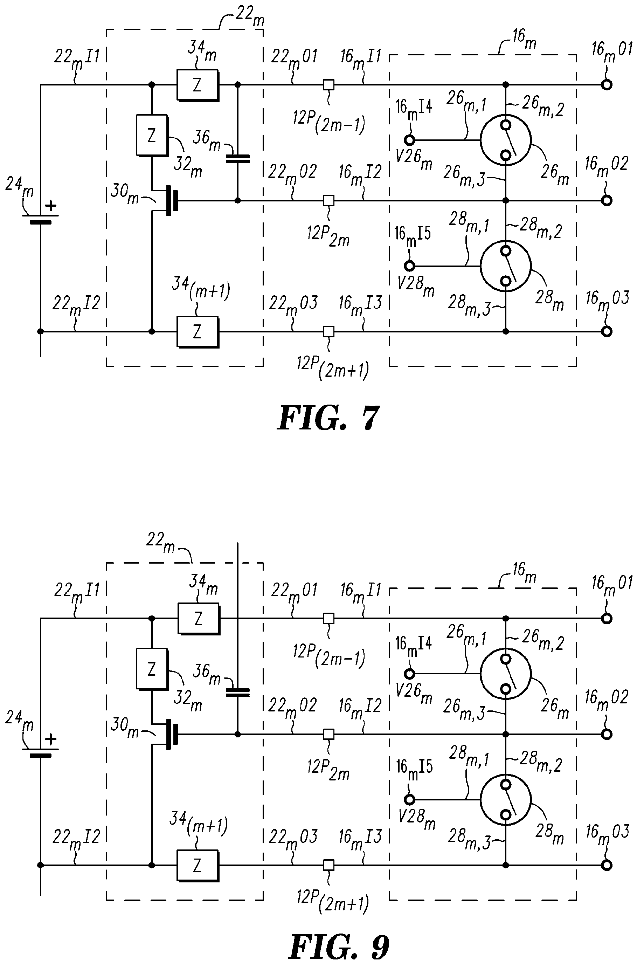

FIG. 7 is a circuit schematic of a switching section 16ₘ (described with reference to FIGs. 1 and 2) connected to a power cell 24ₘ through a filter section 22ₘ in accordance with another embodiment of the present invention. It should be noted that switching networks 16₁, 16₂, ..., 16ₙ in FIG. 1 are comprised of switching sections 16ₘ and that the variable m is used to represent integers 1, 2, ..., n. For example, switching network 16₁ corresponds to switching section 16ₘ, where m is replaced by 1, switching network 16₂ corresponds to switching section 16ₘ, where m is replaced by 2, and switching network 16ₙ corresponds to switching section 16ₘ, where m is replaced by n. Similarly, switching networks 16₁, 16₂, 16₃, 16₄ in FIG. 2 are comprised of switching sections 16ₘ and that the variable m is used to represent integers 1, 2, 3, and 4. For example, switching network 16₁ corresponds to switching section 16ₘ, where m is replaced by 1, switching network 16₂ corresponds to switching section 16ₘ, where m is replaced by 2, switching network 16₃ corresponds to switching section 16ₘ, where m is replaced by 3, and switching network 16₄ corresponds to switching section 16ₘ, where m is replaced by 4.

Switching section 16ₘ has been described with reference to FIG. 3.

Filter section 22ₘ is similar to the filter section described with reference to FIG. 3, except that it also includes balancing elements 30ₘ and 32ₘ. By way of example, balancing elements 30ₘ and 32ₘ are a transistor and a resistor, respectively. Transistor 30ₘ has a drain terminal connected to input terminal 22ₘI1 through resistor 32ₘ, a source terminal connected to input terminal 22ₘI2, and a gate terminal that serves as or, alternatively, is connected to output terminal 22ₘO2. Output terminal 22ₘO1 is connected to input terminal 22ₘI1 through impedance element 34ₘ and to output terminal 22ₘO2 through energy storage element 36ₘ. Input terminal 22ₘI2 is connected to an output terminal 22ₘO3 through impedance element 34₍ₘ₊₁₎. By way of example, impedance elements 34ₘ and 34₍ₘ₊₁₎ are resistors and energy storage element 36ₘ is a capacitor. Resistors 32ₘ and 34ₘ each have a terminal commonly connected together to form a node that is connected to or, alternatively, forms input terminal 22ₘI1. The other terminal of resistor 32ₘ is connected to the drain terminal of transistor 30ₘ and the other terminal of resistor 34ₘ may be connected to a terminal of capacitor 36ₘ to form a node that serves as or, alternatively, may be connected to an output terminal 22ₘO1. The other terminal of capacitor 36ₘ may be connected to the gate terminal of transistor 30ₘ and forms a node that may be connected to or, alternatively, serves as output terminal 22ₘO2. Resistor 34₍ₘ₊₁₎ has a terminal that is connected to the source terminal of transistor 30ₘ to form a node that may be connected to or, alternatively, serves as input terminal 22ₘI2 and a terminal that serves as or, alternatively, may be connected to output terminal 22ₘO3. Because impedance elements 32ₘ, 34ₘ, and 34₍ₘ₋₁₎ are not limited to being resistors, they are identified by the symbol Z in FIG. 7, i.e., they can be other types of impedance elements.

Power cell 24ₘ comprises a battery cell having a positive terminal connected to input terminal 22ₘI1 of filter section 22ₘ and a negative terminal connected to input terminal 22ₘI2 of filter section 22ₘ.

It should be noted that output terminal 22ₘO1 is electrically connected to input pin 12P₍₂ₘ₋₁₎, output terminal 22ₘO2 is electrically connected to input pin 12P₂ₘ, and output terminal 22ₘO3 is electrically connected to input pin 12P₍₂ₘ₊₁₎.

Still referring to FIG. 7, switching section 16ₘ operates in at least three different operating modes including a filtering continuous monitoring or observation mode, a sample and hold mode, and a balancing mode. In the filtering continuous monitoring mode, a control voltage V26ₘ suitable for opening switching element 26ₘ is applied to the control terminal of switching element 26ₘ and a control voltage V28ₘ suitable for closing switching element 28ₘ is applied to the control terminal of switching element 28ₘ. Closing switching element 28ₘ sets the gate-to-source voltage of balancing transistor 30ₘ to substantially zero, thereby turning off balancing transistor 30ₘ. In addition, the currents flowing through filter resistors 34ₘ and 34₍ₘ₊₁₎ are substantially zero, thus capacitor 36ₘ is charged to a voltage substantially equal to the voltage across power cell 24ₘ. MUX 18 (shown in FIGs. 1 and 2) is configured to transmit the voltage at output terminals 16ₘO1 and 16ₘO2 to analog-to-digital converter 20. Thus, a voltage representing the voltage of power cell 24ₘ is transmitted to ADC 20, thereby observing or monitoring the voltage across power cell 24ₘ.

In the sample and hold operating mode, a control voltage V26ₘ suitable for opening switching element 26ₘ is applied to the control terminal of switching element 26ₘ and a control voltage V28ₘ suitable for closing switching element 28ₘ is applied to the control terminal of switching element 28ₘ. Closing switching element 28ₘ sets the gate-to-source voltage of balancing transistor 30ₘ to substantially zero, thereby turning off balancing transistor 30ₘ. In addition, the currents flowing through filter resistors 34ₘ and 34₍ₘ₊₁₎ are substantially zero, thus capacitor 36ₘ is charged to a voltage substantially equal to the voltage across power cell 24ₘ, i.e., capacitor 36ₘ samples the voltage of power cell 24ₘ. Then the control voltage V26ₘ suitable for opening switching element 26ₘ is maintained at the control terminal of switching element 26ₘ and a control voltage V28ₘ suitable for opening switching element 28ₘ is applied to the control terminal of switching element 28ₘ. MUX 18 and ADC 20 (shown in FIGs. 1 and 2) are configured so that output terminals 16ₘO1 and 16ₘO2 are connected to a high impedance network. Because the gate terminal of transistor 30ₘ is a high impedance node, current does not flow through resistor 34ₘ and capacitor 36ₘ. Thus, the sampled voltage appearing across capacitor 36ₘ is held. The voltage across capacitor 36ₘ appears across output terminals 16ₘO1 and 16ₘO2. MUX 18 (shown in FIGs. 1 and 2) is configured to transmit the voltage at output terminals 16ₘO1 and 16ₘO2 to analog-to-digital converter 20. Thus, a sampled voltage representing the voltage of power cell 24ₘ is transmitted to ADC 20.

In the balancing mode of operation, a control voltage V26ₘ suitable for closing switching element 26ₘ is applied to the control terminal of switching element 26ₘ and a control voltage V28ₘ suitable for opening switching element 28ₘ is applied to the control terminal of switching element 28ₘ. Accordingly, capacitor 36ₘ is discharged through switching element 26ₘ and transistor 30ₘ becomes conductive and a balancing current flowing through resistor 32ₘ and transistor 30ₘ discharges power cell 24ₘ. As discussed with reference to FIG. 3, switching element 26ₘ may be referred to as a balancing switch or a switch and switching element 28ₘ may be referred to as a sampling switch or a switch.

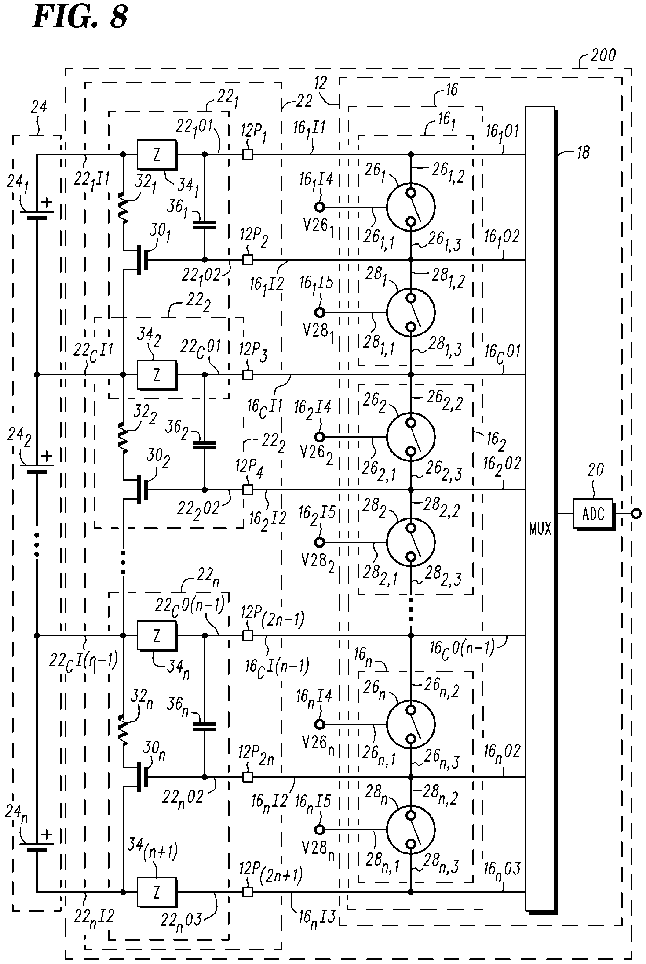

FIG. 8 is a block diagram of a power cell monitor and control module 200 comprising control module 12 and filter circuit 22 as described with reference to FIG. 1, but further including embodiments of circuit implementations of filter circuit 22ₘ and switching networks 16ₘ as described with reference to FIG. 7. Interface circuit 16 has been described with reference to FIG. 4.

Filter 22 is comprised of a plurality of filter sections 22₁, 22₂ ..., 22ₙ, wherein each filter section includes input terminals connected to corresponding power cells 24₁, 24₂, ..., 24ₙ of a power storage unit 24 and output terminals connected to corresponding input pins 12P₁, 12P₂, 12P₃, 12P₄, ..., 12P₍₂ₙ₋₁₎, 12P₂ₙ, 12P₍₂ₙ₊₁₎ of interface network 16. Filter section 22₁ has input terminals 22₁I1 and 22_{C}I1 and output terminals 22₁O1, 22₁O2, and 22_{C}O1; filter section 22₂ has input terminals 22_{C}I1 and 22_{C}I2 and output terminals 22_{C}O1, 22₂O2, and 22_{C}O2; and filter section 22ₙ has input terminals 22_{C}I(n-1) and 22ₙI2 and output terminals 22_{C}O(n-1), 22ₙO2, and 22ₙO3. Filter sections 22₁, 22₂, ..., 22ₙ have been described with reference to FIG. 4. In addition, each filter section 22₁, 22₂, ..., 22ₙ of FIG. 8 includes a balancing transistor and a balancing resistor. More particularly, filter section 22₁ comprises a transistor 30₁ having a drain terminal connected to input terminal 22₁I1 through a resistor 32₁, a source terminal connected to input terminal 22_{C}I1, and a gate terminal that serves as or, alternatively, may be connected to output terminal 22₁O2. Resistor 32₁ and impedance element 34₁ each have a terminal commonly connected together to form a node that may be connected to or, alternatively, forms input terminal 22₁I1. The other terminal of resistor 32₁ is connected to the drain terminal of transistor 30₁ and the other terminal of impedance element 34₁ may be connected to a terminal of capacitor 36₁ to form a node that serves as or, alternatively, may be connected to output terminal 22₁O1. The other terminal of capacitor 36₁ may be connected to the gate terminal of transistor 30₁ and forms a node that may be connected to or, alternatively, serves as output terminal 22₁O2. Impedance element 34₂ has a terminal that is connected to the source terminal of transistor 30₁ to form a node that may be connected to or, alternatively, serves as input terminal 22_{C}I1 and a terminal that may be connected to or, alternatively, serves as output terminal 22_{C}O1. It should be noted that impedance element 34₂ is common to filter sections 22₁ and 22₂.

Filter section 22₂ comprises a transistor 30₂ having a drain terminal connected to input terminal 22_{C}I1 through a resistor 32₂, a source terminal connected to input terminal 22_{C}I2, and a gate terminal that serves as or, alternatively, may be connected to output terminal 22₂O2. Resistor 32₂ and impedance element 34₂ each have a terminal commonly connected together and to input terminal 22_{C}I1. The other terminal of resistor 32₂ is connected to the drain terminal of transistor 30₂ and the other terminal of resistor 34₂ is connected to a terminal of capacitor 36₂ and to output terminal 22_{C}O1. The other terminal of capacitor 36₂ may be connected to the gate terminal of transistor 30₂ and forms a node that may be connected to or, alternatively, serves as output terminal 22₂O2. It should be noted that similar shared components and connections exist between filter section 22₂ and filter section 22₃ (not shown) as exist between filter section 22₁ and filter section 22₂. For the sake of clarity, not all components of filter section 22₂ are shown.

Filter section 22ₙ comprises a transistor 30ₙ having a drain terminal connected to input terminal 22_{C}I(n-1) through a resistor 32ₙ, a source terminal connected to input terminal 22ₙI2, and a gate terminal that serves as or, alternatively, may be connected to output terminal 22ₙO2. Input terminal 22_{C}I(n-1) is connected to output terminal 22_{C}O(n-1) through an impedance element 34ₙ. Resistors 32ₙ and impedance element 34ₙ each have a terminal commonly connected together, to input terminal 22_{C}I(n-1). The other terminal of resistor 32ₙ is connected to the drain terminal of transistor 30ₙ and the other terminal of impedance element 34ₙ may be connected to a terminal of capacitor 36ₙ to form a node that serves as or, alternatively, may be connected to output terminal 22_{C}O(n-1). Output terminal 22_{C}O(n-1) is connected to input pin 12P₍₂ₙ₋₁₎. The other terminal of capacitor 36ₙ may be connected to the gate terminal of transistor 30ₙ and forms a node that may be connected to or, alternatively, serves as output terminal 22ₙO2. Impedance element 34₍ₙ₊₁₎ has a terminal that is connected to the source terminal of transistor 30ₙ to form a node that may be connected to or, alternatively, serves as input terminal 22ₙI2 and a terminal that may be connected to or, alternatively, serves as output terminal 22ₙO3.

Still referring to FIG. 8, interface network 16 that is comprised of switching sections 16₁, 16₂, ..., 16ₙ operate in at least three different operating modes including a filtering continuous observation mode, a sample and hold mode, and a balancing mode. The operating modes of interface circuit 16 have been described with reference to FIG. 7.

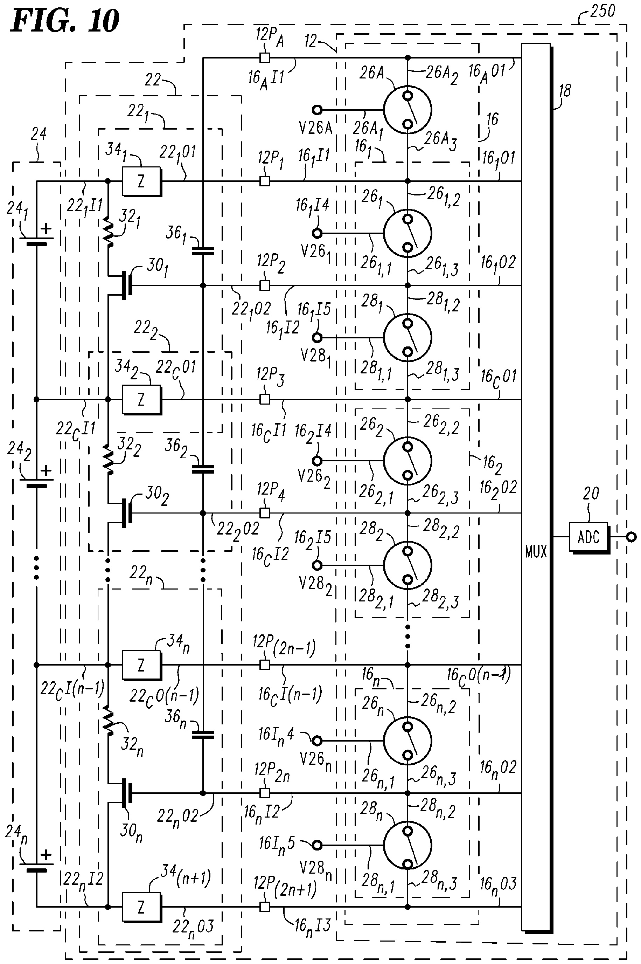

FIG. 9 is a circuit schematic of a switching section 16ₘ of interface network 16 (described with reference to FIGs. 1 and 2) connected to a power cell 24ₘ through a filter section 22ₘ in accordance with another embodiment of the present invention. It should be noted that switching networks 16₁, 16₂, ..., 16ₙ in FIG. 1 are comprised of switching sections 16ₘ and that the variable m is used to represent integers 1, 2, ..., n. For example, switching network 16₁ corresponds to switching section 16ₘ, where m is replaced by 1, switching network 16₂ corresponds to switching section 16ₘ, where m is replaced by 2, and switching network 16ₙ corresponds to switching section 16ₘ, where m is replaced by n. Switching section 16ₘ of FIG. 9 is similar to switching section 16ₘ of FIG. 7, except that one of the terminals of capacitor 36ₘ is not connected to input pin 12P₍₂ₘ₋₁₎. Thus, capacitor 36ₘ has a terminal connected to input pin 12P₂ₘ but its other terminal is shared with another circuit as shown in FIG. 10. As discussed with reference to FIG. 3, switching element 26ₘ may be referred to as a balancing switch or balancing switching element and switch 28ₘ may be referred to as a sampling switch or sampling switching element.

FIG. 10 is a block diagram of a power cell monitor and control module 250 comprising control module 12 and interface network 16 as described with reference to FIG. 6, but further including embodiments of circuit implementations of filter circuit 22 and interface circuit 16 described with reference to FIG. 9. Control module 250 is connected to a battery unit 24. Control module 250 is similar to control module 150 of FIG. 6 except that filter circuit 22 further includes balancing elements such as transistors 30₁, ..., 30ₙ and impedance elements 32₁, ..., 32ₙ. More particularly, filter section 22₁ comprises a transistor 30₁ having a drain terminal connected to input terminal 22₁I1 through a resistor 32₁, a source terminal connected to input terminal 22_{C}I1, and a gate terminal that serves as or, alternatively, may be connected to output terminal 22₁O2. Resistor 32₁ and impedance element 34₁ each have a terminal commonly connected together to form a node that may be connected to or, alternatively, forms input terminal 22₁I1. The other terminal of resistor 32₁ is connected to the drain terminal of transistor 30₁ and the other terminal of impedance element 34₁ serves as or, alternatively, may be connected to output terminal 22₁O1, which output terminal is connected to input pin 12P₁. A terminal of capacitor 36₁ is connected to input pin 12P_{A}. The other terminal of capacitor 36₁ is connected to the gate terminal of transistor 30₁ and forms a node that may be connected to or, alternatively, serves as output terminal 22₁O2. This terminal of capacitor 36₁ and output terminal 22₁O2 are connected to input pin 12P₂. Impedance element 34₂ has a terminal that is connected to the source terminal of transistor 30₁ to form a node that may be connected to or, alternatively, serves as input terminal 22_{C}I1 and a terminal that may be connected to or, alternatively, serves as output terminal 22_{C}O1. It should be noted that impedance element 34₂ is common to filter sections 22₁ and 22₂.

Filter section 22₂ comprises a transistor 30₂ having a drain terminal connected to input terminal 22_{C}I1 through a resistor 32₂, a source terminal connected to input terminal 22_{C}I2, and a gate terminal that serves as or, alternatively, may be connected to output terminal 22₂O2. Resistor 32₂ and impedance element 34₂ each have a terminal commonly connected together and to input terminal 22_{C}I1. The other terminal of resistor 32₂ is connected to the drain terminal of transistor 30₂ and the other terminal of impedance element 34₂ serves as or, alternatively, may be connected to output terminal 22_{C}O1, which output terminal is connected to input pin 12P₃. A terminal of capacitor 36₂ is connected to the gate of transistor 30₁, a terminal of capacitor 36₁, and to input pin 12P₂. The other terminal of capacitor 36₂ is connected to the gate terminal of transistor 30₂ and forms a node that may be connected to or, alternatively, serves as output terminal 22₂O2, which output is connected to input pin 12P₄. It should be noted that similar shared components and connections exist between filter section 22₂ and filter section 22₃ (not shown) as exist between filter section 22₁ and filter section 22₂. For the sake of clarity, not all components of filter section 22₂ are shown.

Filter section 22ₙ comprises a transistor 30ₙ having a drain terminal connected to input terminal 22_{C}I(n-1) through a resistor 32ₙ, a source terminal connected to input terminal 22ₙI2, and a gate terminal that serves as or, alternatively, may be connected to output terminal 22ₙO2, which is connected to input pin 12P₂ₙ. Impedance element 34ₙ has a terminal that is connected to the source terminal of a transistor to form a node that may be connected to or, alternatively, serves as input terminal 22_{C}I(n-1) and a terminal that may be connected to or, alternatively, serves as output terminal 22_{C}O(n-1). Output terminal 22_{C}O(n-1) is connected to input pin 12P₍₂ₙ₋₁₎. Resistor 32ₙ and impedance element 34ₙ each have a terminal commonly connected together and to input terminal 22_{C}I(n-1). The other terminal of resistor 32ₙ is connected to the drain terminal of transistor 30ₙ and the other terminal of impedance element 34ₙ may serve as or, alternatively, may be connected to output terminal 22_{C}O(n-1). The other terminal of capacitor 36ₙ is connected to the gate terminal of transistor 30ₙ and forms a node that may be connected to or, alternatively, serves as output terminal 22ₙO2. Impedance element 34₍ₙ₊₁₎ has a terminal that is connected to the source terminal of transistor 30ₙ to form a node that may be connected to or, alternatively, serves as input terminal 22ₙI2 and a terminal that may be connected to or, alternatively, serves as output terminal 22ₙO3, which is connected to input pin 12P₍₂ₙ₊₁₎.

In accordance with another embodiment, the polarities of the cells are switched such that the cells have the opposite polarities shown in the figures. Alternatively, the n-channel transistors can be replaced by p-channel transistors.

The operation of control module 250 is similar to that of control module 150 (FIG. 6) except in the balancing mode of operation. Assuming that the default operating mode is the filtered continuous observation mode, whereby switching elements 26A, 28₁, ..., 28ₙ, are closed and switching elements 26₁, ..., 26ₙ are open, the voltage across power cell 24₁ can be balanced by applying a control voltage V26₁ to the control terminal of switching element 26₁ that is suitable for closing switching element 26₁ and a control voltage V28₁ to the control terminal of switching element 28₁ that is suitable for opening switching element 28₁. Accordingly, transistor 30₁ becomes conductive and a balancing current flowing through resistor 32₁ and transistor 30₁ discharges power cell 24₁.

It should be noted that the voltage across the other power cells can be balanced using a similar technique.

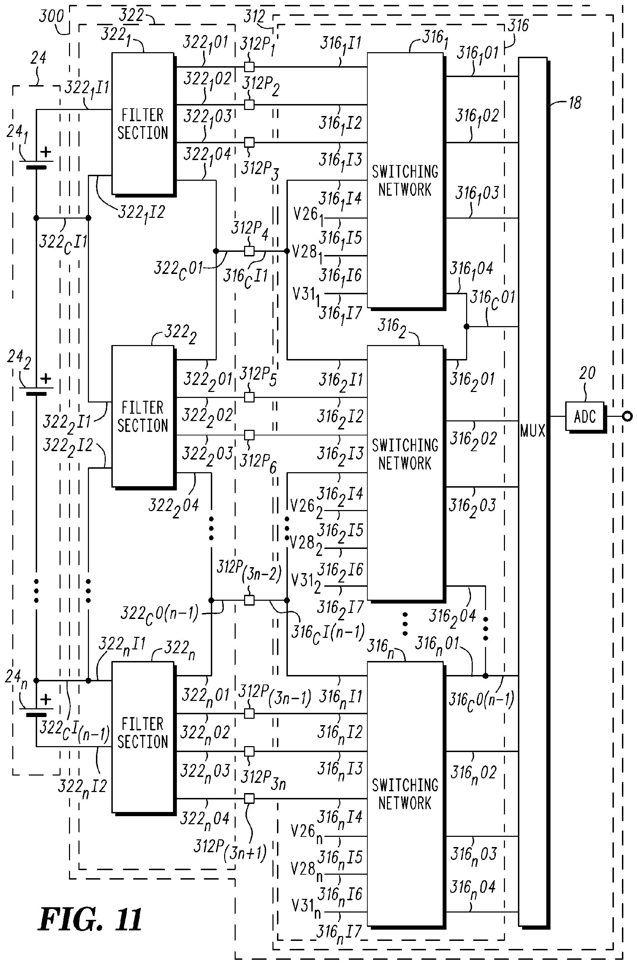

FIG. 11 is a block diagram of a power cell monitor and control circuit 300 comprising a control module 312 connected to a filter circuit 322 in accordance with an embodiment of the present invention. Power cell monitor and control circuit 300 is connected to a power storage unit 24. Control module 312 includes an interface network 316 having inputs that are connected to or, alternatively, that serve as inputs of control module 312 and outputs that are connected to the inputs of a multiplexer (MUX) 18, which has an output connected to an analog-to-digital converter (ADC) 20. Power storage unit 24 may be comprised of a plurality of power cells or batteries 24₁, 24₂,..., 24ₙ, which are connected to corresponding filter sections 322₁, 322₂,..., 322ₙ, respectively of control circuit 300. Alternatively, the power storage units may be comprised of capacitors, fuel cells, or the like. Interface network 316 may be comprised of a plurality of switching networks 316₁, 316₂,..., 316ₙ, where switching networks 316₁ has input terminals 316₁I1, 316₁I2, 316₁I3, 316₁I4, 316₁I5, 316₁I6, and 316₁I7 and output terminals 316₁O1, 316₁O2, 316₁O3, and 316₁O4; switching network 316₂ has input terminals 316₂I1, 316₂I2, 316₂I3, 316₂I4, 316₂I5, 316₂I6, and 316₂I7 and output terminals 316₂O1, 316₂O2, 316₂O3, and 316₂O4; and switching network 316ₙ has input terminals 316ₙI1, 316ₙI2, 316ₙI3, 316ₙI4, 316ₙI5, 316ₙI6, and 316ₙI7 and output terminals 316ₙO1, 316ₙO2, 316ₙO3, and 316ₙO4. In accordance with an embodiment, input terminal 316₁I4 is connected to input terminal 316₂I1 to form an input terminal 316_{C}I1 and input terminal 316₍ₙ₋₁₎I4 is connected an input terminal 316ₙI1 to form an input terminal 316_{C}I(n-1); output terminal 316₁O4 is connected to output terminal 316₂O1 to form an output terminal 316_{C}O1, and output terminal 316₍ₙ₋₁₎O4 is connected to output terminal 316ₙO1 to form an output terminal 316_{C}O(n-1).

In accordance with another embodiment, control module 312 is a monolithically integrated semiconductor device in a semiconductor package having input pins or leads 312P₁, 312P₂, 312P₃, 312P₄, 312P₅, 312P₆,..., 312P₍₃ₙ₋₂₎, 312P₍₃ₙ₋₁₎, 312P₃ₙ, and 312P₍₃ₙ₊₁₎, wherein n represents an integer. By way of example, input terminals 316₁I1, 316₁I2, 316₁I3, 316_{C}I1, 316₂I2, 316₂I3, ..., 316_{C}I(n-1), 316ₙI2, 316ₙI3, and 316ₙI4 are connected to input pins 312P₁, 312P₂, 312P₃, 312P₄, 312P₅, 312P₆,..., 312P(₃ₙ₋₂), 312P₍₃ₙ₋₁₎, 312P₃ₙ, and 312P₍₃ₙ₊₁₎, respectively. Although, input terminals 316₁I1, 316₁I2, 316₁I3, 316_{C}I1, 316₂I2, 316₂I3, ..., 316_{C}I(n-1), 316ₙI2, 316ₙI3, and 316ₙI4 are shown as being directly connected to input pins 312P₁, 312P₂, 312P₃, 312P₄, 312P₅, 312P₆,..., 312P₍₃ₙ₋₂₎, 312P₍₃ₙ₋₁₎, 312P₃ₙ, and 312P₍₃ₙ₊₁₎, respectively, this is not a limitation of the present invention, e.g., input terminals 316₁I1, 316₁I2, 316₁I3, 316_{C}I1, 316₂I2, 316₂I3, ..., 316_{C}I(n-1), 316ₙI2, 316ₙI3, and 316ₙI4 can be connected to input pins 312P₁, 312P₂, 312P₃, 312P₄, 312P₅, 312P₆,..., 312P₍₃ₙ₋₂₎, 312P₍₃ₙ₋₁₎, 312P₃ₙ, and 312P₍₃ₙ₊₁₎, respectively, through other circuit elements.

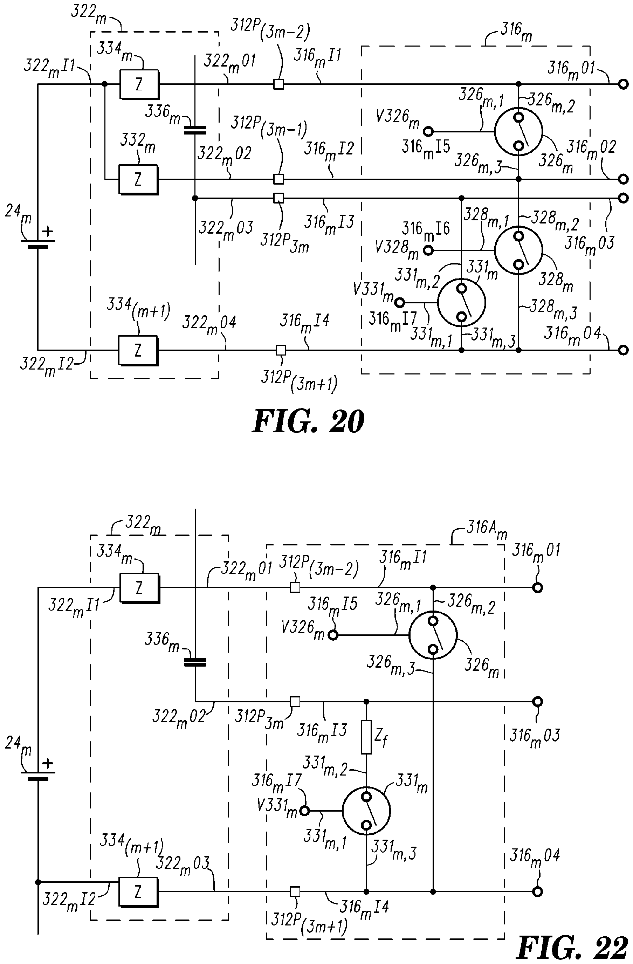

In accordance with another embodiment, control module 312 and filter section 322 or a part of filter section 322 are monolithically integrated to form an integrated semiconductor device. An example of partial integration of the filter is depicted in FIG. 22. In embodiments in which control module 312 and filter section 322 or part of filter section 322 are monolithically integrated, input pins 312P₁, 312P₂, 312P₃, 312P₄, 312P₅, 312P₆,..., 312P₍₃ₙ₋₂₎, 312P₍₃ₙ₋₁₎, 312P₃ₙ, and 312P₍₃ₙ₊₁₎ are absent.

Input terminals 316₁I5, 316₁I6, and 316₁I7 of switching network 316₁ are coupled for receiving control signals V26₁, V28₁, and V31₁, respectively; input terminals 316₂I5, 310₂I6, and 316₂I7 of switching network 316₂ are coupled for receiving control signals V26₂, V28₂, and V31₂, respectively; and input terminals 316ₙI5, 316ₙI6 and 316ₙI7 of switching network 316ₙ are coupled for receiving control signals V26ₙ, V28ₙ, and V31ₙ, respectively.

Output terminals 316₁O1, 316₁O2, 316₁O3, 316_{C}O1, 316₂O2, 316₂O3, 316_{C}O(n-1), 316ₙO2, 316ₙO3, and 316ₙO4 of switching networks 316₁, ..., 316ₙ are connected to corresponding input terminals of MUX 18.

Filter 322 is comprised of a plurality of filter sections 322₁, 322₂,..., 322ₙ, wherein each filter section includes input terminals connected to corresponding power cells of a power storage unit 24 and output terminals connected to corresponding input pins of interface network 316. Filter section 322₁ has input terminals 322₁I1 and 322₁I2 and output terminals 322₁O1, 322₁O2, 322₁O3, and 322₁O4; filter section 322₂ has input terminals 322₂I1 and 322₂I2 and output terminals 322₂O1, 322₂O2, 322₂O3, and 322₂O4; and filter section 322ₙ has input terminals 322ₙI1 and 322ₙI2 and output terminals 322ₙO1, 322ₙO2, 322ₙO3, and 322ₙO4. In accordance with an embodiment, input terminal 322₁I2 may be connected to input terminal 322₂I1 to form an input terminal 322_{C}I1 and input terminal 322₍ₙ₋₁₎I2 may be connected to input terminal 322ₙI1 to form an input terminal 322_{C}I(n-1). Output terminal 322₍ₙ₋₁₎04 may be connected to output terminal 322₂01 to form an output terminal 322_{C}O1 and output terminal 322₂O4 may be connected to output terminal 322ₙO1 to form an output terminal 322_{C}O(n-1). In accordance with embodiments in which control module 312 is a monolithically integrated semiconductor device and filter 322 is formed from discrete circuit elements, output terminal 322₁O1 is connected to input pin 312P₁; output terminal 322₁O2 is connected to input pin 312P₂; output terminal 322₁O3 is connected to input pin 312P₃; output terminal 322_{C}O1 is connected to input pin 312P₄; output terminal 322₂O2 is connected to input pin 312P₅; output terminal 322₂O3 is connected to input pin 312P₆; output terminal 322_{C}O(n-1) is connected to input pin 312P₍₃ₙ₋₂₎; output terminal 322ₙO2 is connected to input pin 312P₍₃ₙ₋₁₎; output terminal 322ₙO3 is connected to input pin 312P₃ₙ; and output terminal 322ₙO4 is connected to input pin 312P₍₃ₙ₊₁₎.

Input terminal 322₁I1 is connected to the positive terminal of power cell 24₁ and input terminal 322_{C}I1 is connected to the negative and positive terminals of power cells 24₁ and 24₂, respectively. Input terminal 322_{C}I(n-1) is connected to the positive terminal of power cell 24ₙ and input terminal 322ₙI2 is connected to the negative terminal of power cell 24ₙ.

It should be noted that the subscript "n" represents an integer. It should be further noted that the numbers of switching networks 316₁, 316₂,..., 316ₙ, filter sections 322₁, 322₂, ..., 322ₙ, and power cells 24₁, 24₂,..., 24ₙ are not limitations of the present invention.

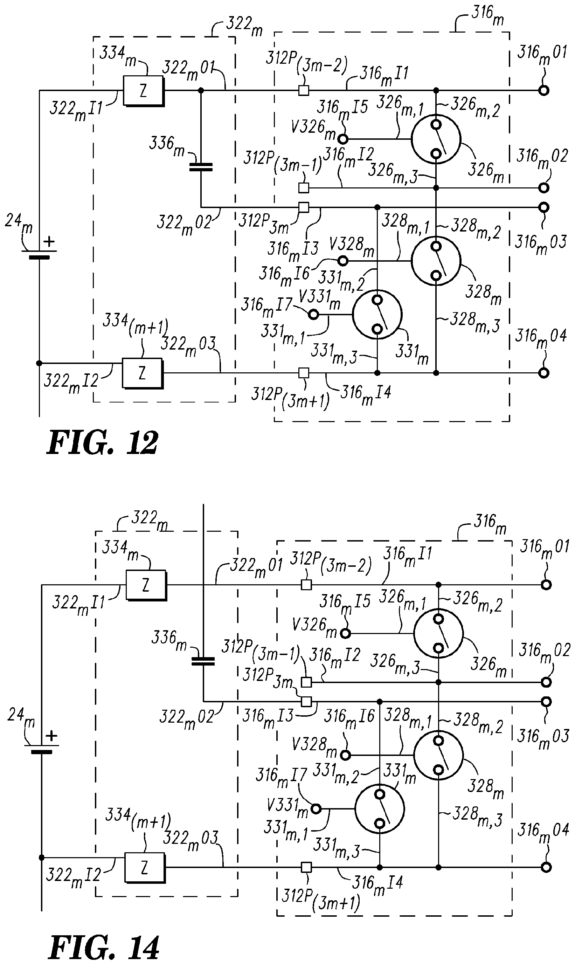

FIG. 12 is a circuit schematic of a switching section 316ₘ of interface network 316 (described with reference to FIG. 11) connected to a power cell 24ₘ through a filter section 322ₘ in accordance with another embodiment of the present invention. It should be noted that switching networks 316₁, 316₂, ..., 316ₙ in FIG. 11 are comprised of switching sections 316ₘ and that the variable m is used to represent integers 1, 2, ..., n. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n.

Switching section 316ₘ comprises switching elements 326ₘ, 328ₘ, and 331ₘ, wherein each switching element 326ₘ, 328ₘ, and 331ₘ includes a control terminal and a pair of conduction terminals. More particularly, switching element 326ₘ has a control terminal 326_{m,1}, a conduction terminal 326_{m,2}, and a conduction terminal 326_{m,3}. Conduction terminal 326_{m,2} may be connected to terminals 316ₘI1 and 316ₘO1 or, alternatively, terminals 316ₘI1 and 316ₘO1 may form an input/output terminal. Switching element 328m has a control terminal 328_{m,1}, a conduction terminal 328m,2, and a conduction terminal 328_{m,3}. Conduction terminal 328_{m,2} is connected to conduction terminal 326_{m,3} and to terminals 316ₘI2 and 316ₘO2. Conduction terminal 328_{m,3} is connected to input terminal 316ₘI4 and to output terminal 316ₙO4. Conduction terminal 328_{m,3} may be connected to terminals 316ₘI4 and 316ₘO4 or, alternatively, terminals 316ₘI4 and 316ₘO4 may form an input/output terminal. Conduction terminal 331_{m,2} is connected to input terminal 316ₘI3 and to output terminal 316ₘO3. It should be noted that terminals 326_{m,1}, 328_{m,1}, and 331_{m,1} correspond to terminals 316ₙI5, 316ₙI6, and 316ₙI7, respectively, of FIG. 11. Switching element 331ₘ may be referring to as a sampling switch and switching elements 328ₘ and 326ₘ may be referred to as balancing switches or current control elements.

Filter section 322ₘ comprises an impedance element 334ₘ having a terminal connected to or, alternatively, serving as input terminal 322ₘI1 and a terminal connected to or, alternatively, serving as output terminal 322ₘO1. Output terminal 322ₘO1 may be connected to output terminal 322ₘO2 through an energy storage element 336ₘ. Input terminal 322ₘI2 may be connected to an output terminal 322ₘO3 through an impedance element 334₍ₘ₊₁₎. By way of example, impedance elements 334ₘ and 334₍ₘ₊₁₎ are resistors and energy storage element 336ₘ is a capacitor. In accordance with embodiments in which switching section 316ₘ is a monolithically integrated semiconductor device or a portion of a monolithically integrated semiconductor device and circuit elements 334ₘ, 334₍ₘ₊₁₎, and 336ₘ are discrete circuit elements, circuit elements 334ₘ, 336ₘ, and 334₍ₘ₊₁₎ are connected to switching section 316ₘ through input pins 312P₍₃ₘ₋₂₎, 312P₃ₘ, and 312P₍₃ₘ₊₁₎ i.e., output terminal 322ₘO1 is connected to input pin 312P₍₃ₘ₋₂₎, output terminal 322ₘO2 is connected to input pin 312P₃ₘ, and output terminal 322ₘO3 is connected to input pin 312P₍₃ₘ₊₁₎. Input pin 312P₍₃ₘ₋₁₎ may not be connected to another circuit element. In accordance with another embodiment, the filter can be partially or fully integrated monolithically and the output pins will change accordingly. Because impedance elements are not limited to being resistors they are identified by the symbol Z, i.e., they can be other types of impedance elements.

Power cell 24ₘ comprises a battery cell having a positive terminal connected to input terminal 322ₘI1 of filter section 22ₘ and a negative terminal connected to input terminal 322ₘI2 of filter section 322ₘ.

It should be noted that output terminal 322ₘO1 is electrically connected to input terminal 316ₘI1 through input pin 312P₍₃ₘ₋₂₎, output terminal 322ₘO2 is electrically connected to input terminal 316ₘI3 through input pin 312P₃ₘ, and output terminal 322ₘO3 is electrically connected to input terminal 316ₘI4 through input pin 312P₍₃ₘ₊₁₎.

Still referring to FIG. 12, switching sections 316ₘ operate in at least three different operating modes including a filtering continuous observation mode, a sample and hold mode, and a balancing mode. In the filtering continuous observation operating mode, the voltage across power cell 24ₘ is monitored by applying control voltages V326ₘ and V328ₘ to the control terminals of switching elements 326ₘ and 328ₘ, respectively, that are suitable for opening these switching elements and applying a control voltage V331ₘ to the control terminal of switching element 331ₘ that is suitable for closing this switching element. Thus, the voltage across power cell 24ₘ appears at output terminals 316ₘO1 and 316ₘO3. MUX 18 (shown in FIG. 11) is configured to transmit the voltage at output terminals 316ₘO1 and 316ₘO3 to analog-to-digital converter 20. Thus, a voltage representing the filtered voltage of power cell 24ₘ is transmitted to ADC 20, thereby observing or monitoring the voltage across power cell 24ₘ.

In the sample and hold operating mode, the voltage across power cell 24ₘ can be sampled and stored or held by applying control voltages V326ₘ and V328ₘ to the control terminals of switching elements 326ₘ and 328ₘ, respectively, that are suitable for opening these switching elements and applying a control voltage V331ₘ to the control terminal of switching element 331ₘ that is suitable for closing this switching element. Capacitor 336ₘ is charged to a voltage substantially equal to the voltage across power cell 24ₘ, i.e., capacitor 336ₘ samples the voltage of power cell 24ₘ.

After sampling the voltage on power cell 24ₘ, the control voltage V331ₘ suitable for opening switching element 331ₘ is applied to the control terminal of switching element 331ₘ whereas control voltages V326ₘ and V328ₘ suitable for maintaining switching elements 326ₘ and 328ₘ in an open configuration are maintained at the control terminals of switching elements 326ₘ and 328ₘ. Thus, the sampled voltage appearing across capacitor 336ₘ is held and appears across output terminals 316ₘO1 and 316ₘO3. MUX 18 is configured to transmit the voltage at output terminals 316ₘO1 and 316ₘO3 to ADC 20. Thus, a voltage representing the sample and hold voltage of power cell 24ₘ is transmitted to ADC 20.

In the balancing operating mode, the voltage across power cell 24ₘ can be balanced by applying control voltages V326ₘ and V328ₘ to the control terminals of switching elements 326ₘ and 328ₘ, respectively, that are suitable for closing switching elements 326ₘ and 328ₘ. Accordingly, a balancing current flowing through impedance element 334ₘ, switching element 326ₘ, switching element 328ₘ and impedance element 334₍ₘ₊₁₎ discharges power cell 24ₘ. Similar to switching elements 26ₘ and 28ₘ of FIG. 3, switching element 326ₘ may be referred to as a balancing switching element or a balancing switch and switching element 331ₘ may be referred to as a sampling switching element or a sampling switch.

It should be noted that switching element 328ₘ is an optional element and in accordance with embodiments in which switching element 328ₘ is absent output terminal 316ₘO2 is shorted to output terminal 316ₘO4.

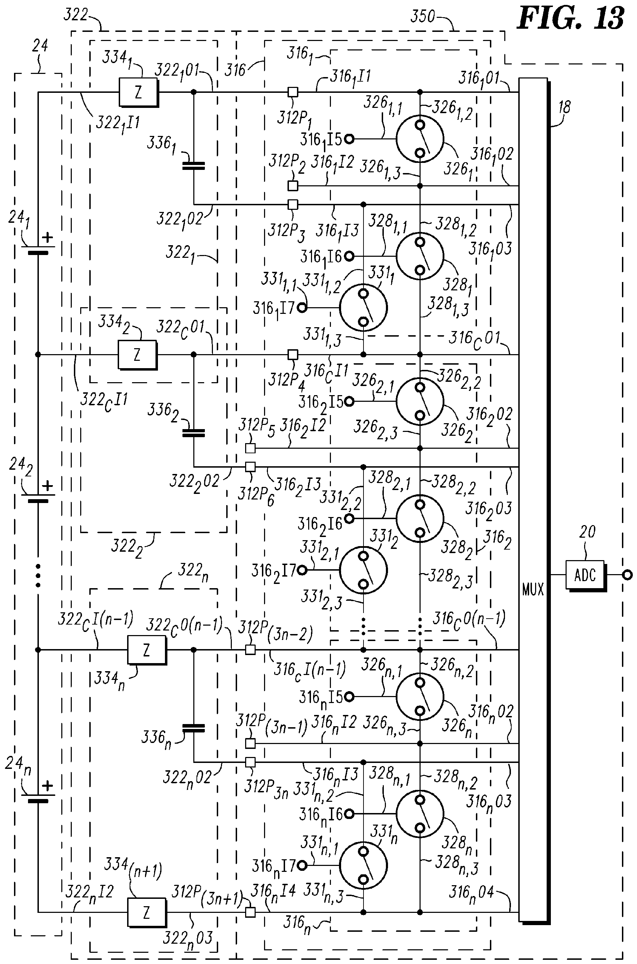

FIG. 13 is a block diagram of a power cell monitor and control circuit 350 comprising control module 312 and filter circuit 322 as described with reference to FIG. 11, but further including the embodiments of circuit implementations of filter circuit 322 and interface circuit 316 described with reference to FIG. 12. Similar to the embodiment of FIG. 11, switching networks 316₁, 316₂, ..., 316ₙ of interface network 316 shown in FIG. 13 are comprised of switching sections 316ₘ where the variable m is used to represent integers 1, 2, ..., n as described with reference to FIG. 12. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n.

Control circuit 350 is connected to a battery unit 24. As described above, control module 312 includes an interface network 316 having input terminals that are coupled to or, alternatively, that serve as inputs of control module 312 and output terminals that are coupled to the inputs of a multiplexer (MUX) 18, which has outputs connected to an ADC 20.

Switching network 316₁ comprises switching elements 326₁, 328₁, and 331₁, wherein each switching element 326₁, 328₁, and 331₁ includes a control terminal and a pair of conduction terminals. More particularly, switching element 326₁ has a control terminal 326_{1,1}, a conduction terminal 326_{1,2}, and a conduction terminal 326_{1,3}. Conduction terminal 326_{1,2} may be connected to terminals 316₁I1 and 316₁O1 or, alternatively, terminals 316₁I1 and 316₁O1 may form an input/output terminal. Switching element 328₁ has a control terminal 328_{1,1}, a conduction terminal 328_{1,2}, and a conduction terminal 328_{1,3}. Conduction terminal 328_{1,2} is connected to conduction terminal 326_{1,3} and to terminals 316₁I2 and 316₁O2. Conduction terminal 328_{1,3} is connected to input terminal 316_{C}I1 and to output terminal 316_{C}O1. Conduction terminal 328_{1,3} may be connected to terminals 316_{C}I1 and 316_{C}O1 or alternatively, terminals 316_{C}I1 and 316_{C}O1 may form an input/output terminal. Conduction terminal 331_{1,2} is connected to input terminal 316₁I3 and to output terminal 316ₘO3. It should be noted that terminals 326_{1,1}, 328_{1,1}, and 331_{1,1} correspond to terminals 316₁I5, 316₁I6, and 316₁I7, respectively, of FIG. 11.

Switching network 316₂ comprises switching elements 326₂, 328₂, and 331₂, wherein each switching element 326₂, 328₂, and 331₂ includes a control terminal and a pair of conduction terminals. More particularly, switching element 326₂ has a control terminal 326_{2,1}, a conduction terminal 326_{2,2}, and a conduction terminal 326_{2,3}. Conduction terminal 326_{2,2} may be connected to terminals 316_{C}I1 and 316_{C}O1 or, alternatively, terminals 316_{C}I1 and 316_{C}O1 may form an input/output terminal. Switching element 328₂ has a control terminal 328_{2,1}, a conduction terminal 328_{2,2}, and a conduction terminal 328_{2,3}. Conduction terminal 328_{2,2} is connected to conduction terminal 326_{2,3} and to terminals 316₂I2 and 316₂O2. Conduction terminal 331_{2,2} is connected to input terminal 316₂I3 and to output terminal 316₂O3. Conduction terminals 328_{2,3} and 331_{2,3} are connected with the switching network 316ₙ described below. It should be noted that similar shared components and connections exist between switching network 316₂ and a switching section connected to switching network 316₂ as exist between switching network 316₁ and switching network 316₂. For the sake of clarity, not all components of switching network 316₂ are shown.

Switching network 316ₙ comprises switching elements 326ₙ, 328ₙ, and 331ₙ, wherein each switching element 326ₙ, 328ₙ, and 331ₙ includes a control terminal and a pair of conduction terminals. More particularly, switching element 326ₙ has a control terminal 326_{n,1}, a conduction terminal 326_{n,2}, and a conduction terminal 326_{n,3}. Conduction terminal 326_{n,2} may be connected to terminals 316_{C}I(n-1) and 316cO(n-1) or, alternatively, terminals 316_{C}I(n-1) and 316_{C}O(n-1) may form an input/output terminal. Switching element 328ₙ has a control terminal 328_{n,1}, a conduction terminal 328_{n,2}, and a conduction terminal 328_{n,3}. Conduction terminal 328_{n,2} is connected to conduction terminal 326_{n,3} and to terminals 316ₙI2 and 316ₙO2. Conduction terminal 328_{n,3} is connected to input terminal 316ₙI4 and to output terminal 316ₙO4. Conduction terminal 328_{n,3} may be connected to terminals 316ₙI4 and 316ₙO4 or alternatively, terminals 316ₙI4 and 316ₙO4 may form an input/output terminal. Conduction terminal 331_{n,2} is connected to input terminal 316ₙI3 and to output terminal 316ₙO3 and conduction terminal 331_{n,3} is connected to input terminal terminals 316ₙI4 and output terminal 316ₙO4.

Filter 322 is comprised of a plurality of filter sections 322₁, 322₂ ..., 322ₙ, wherein each filter section includes input terminals connected to corresponding power cells 24₁, 24₂, ..., 24ₙ of a power storage unit 24 and output terminals connected to corresponding input terminals of switching networks 316₁, 316₂, ..., 316ₙ. Filter section 322₁ has input terminals 322₁I1 and 322_{C}I1 and output terminals 322₁O1, 322₁O2, and 322_{C}O1; filter section 322₂ has input terminals 322_{C}I1 and 322_{C}I2 and output terminals 322_{C}O1, 322₂O2, and 322_{C}O2; and filter section 322ₙ has input terminals 322_{C}I(n-1) and 322ₙI2 and output terminals 322_{C}O(n-1), 322ₙO2, and 322ₙO3.

Input terminal 322₁I1 is connected to the positive terminal of power cell 24₁ and input terminal 322_{C}I1 is connected to the negative and positive terminals of power cells 24₁ and 24₂, respectively. Input terminal 322_{C}I(n-1) is connected to the positive terminal of power cell 24ₙ and input terminal 322ₙI2 is connected to the negative terminal of power cell 24ₙ.

Filter section 322₁ comprises impedance elements 334₁ and 334₂ and an energy storage element 336₁. More particularly, output terminal 322₁O1 is connected to input terminal 322₁I1 through impedance element 334₁ and to output terminal 322₁O2 through energy storage element 336₁. Input terminal 322_{C}I1 is connected to output terminal 322_{C}O1 through impedance element 334₂. It should be noted that impedance element 334₂ is common to filter sections 322₁ and 322₂. By way of example, impedance elements 334₁ and 334₂ are resistors and energy storage element 336₁ is a capacitor.

Filter section 322₂ comprises impedance element 334₂ and capacitor 336₂. More particularly, output terminal 322_{C}O1 is connected to input terminal 322_{C}I1 through impedance element 334₂ and to output terminal 322₂O2 through energy storage element 336₂. By way of example, impedance element 334₂ is a resistor and energy storage element 336₂ is a capacitor. It should be noted that similar shared components and connections exist between filter section 322₂ and another filter section connected to filter section 322₂ as exist between filter section 322₁ and filter section 322₂. For the sake of clarity, not all components of filter section 322₂ are shown.

Filter section 322ₙ comprises resistors 334ₙ and 334₍ₙ₊₁₎ and energy storage element 336ₙ. More particularly, output terminal 322_{C}O(n-1) is connected to input terminal 322_{C}I(n-1) through impedance element 334ₙ and to output terminal 322ₙO2 through energy storage element 336ₙ. Input terminal 322ₙI2 is connected to output terminal 322ₙO3 through impedance element 334₍ₙ₊₁₎. By way of example, impedance elements 334ₙ and 334₍ₙ₊₁₎ are resistors and energy storage element 336ₙ is a capacitor.

Still referring to FIG. 13, interface network 316 operates in at least three different operating modes including a filtering continuous observation mode, a sample and hold mode, and a balancing mode. The operating modes of interface circuit 316 have been described with reference to FIG. 12.

It should be noted that switching elements 328₁, 328₂, ..., 328ₙ are optional elements and in accordance with embodiments in which switching elements 328₁, 328₂, ..., 328ₙ are absent, output terminal 316₁O2 is shorted to output terminal 316₁O4, output terminal 316₂O2 is shorted to output terminal 316₂O4, and output terminal 316ₙO2 is shorted to output terminal 316ₙO4, respectively.

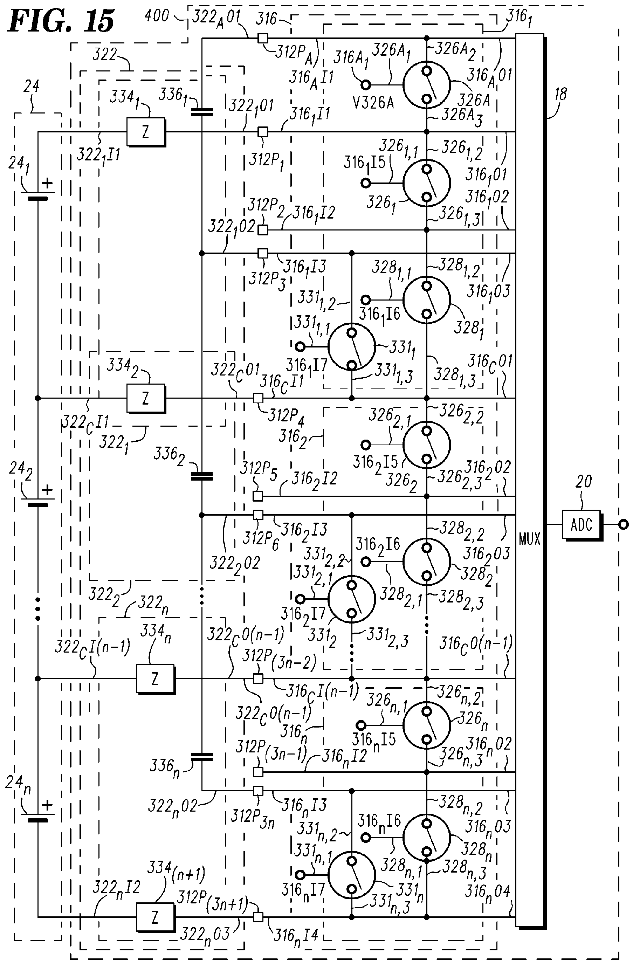

FIG. 14 is a circuit schematic of a switching section 316ₘ of interface network 316 (described with reference to FIGs. 12 and 13) connected to a power cell 24ₘ through a filter section 322ₘ in accordance with another embodiment of the present invention. It should be noted that switching networks 316₁, 316₂, ..., 316ₙ in FIGs. 11 and 15 are comprised of switching sections 316ₘ and that the variable m is used to represent integers 1, 2, ..., n. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n. Switching section 316ₘ of FIG. 14 is similar to switching section 316ₘ of FIG. 12, except that one of the terminals of capacitor 336ₘ is not connected to input pin 312P₍₃ₘ₋₂₎. Thus, capacitor 336ₘ has a terminal connected to input pin 312P₃ₘ but its other terminal is not connected to input pin 312P₍₃ₘ₋₂₎. As discussed with reference to FIG. 12, switching element 326ₘ may be referred to as a balancing switching element and switching element 331ₘ may be referred to as a sampling switching element.

It should be noted that switching element 328ₘ is an optional element and in accordance with embodiments in which switching element 328ₘ is absent output terminal 316ₘO2 is shorted to output terminal 316ₘO4.

FIG. 15 is a block diagram of a power cell monitor and control module 400 comprising control module 312 and filter circuit 322 as described with reference to FIG. 11, but further including embodiments of circuit implementations of filter circuit 322 and interface circuit 316 described with reference to FIG. 14. It should be noted that the embodiment of FIG. 15 also differs from the embodiment of FIG. 11 in that input pins 312P₂, 312P₅, and 312P₍₃ₙ₋₁₎ are left floating in the embodiment of FIG. 15. Control module 400 is connected to a battery unit 24. As described above, control module 312 includes an interface network 316 having input terminals that are connected to or, alternatively, that serve as inputs of control module 312 and output terminals that are connected to the inputs of MUX 18, which has outputs connected to ADC 20. Interface circuit 316 is comprised of switching networks 316₁, 316₂, ..., 316ₙ and a switching element 326A. Switching networks 316₁, 316₂, ..., 316ₙ have been described with reference to FIG. 13.

Switching element 326A has a control terminal 326A₁ coupled for receiving a control signal V326A, a conduction terminal 326A₂, and a conduction terminal 326A₃. Conduction terminal 326A₁ may serve as input terminal 316A₁. Conduction terminal 326A₂ is connected to conduction terminal 316_{A}I1 and output terminal 316_{A}O1. Conduction terminal 326A₃ is connected to input terminal 316₁I1, output terminal 316₁O1, and to conduction terminal 326_{1,2}.

Output terminals 316₁O1, 316₁O2, 316₁O3, 316_{C}O1, 316₂O2, 316₂O3, ..., 316_{C}O(n-1), 316ₙO2, 316ₙO3, 316ₙO4, and 316_{A}O1 are connected to corresponding input terminals of MUX 18.

Filter 322 is comprised of a plurality of filter sections 322₁, 322₂, ..., 322ₙ, wherein each filter section includes input terminals connected to corresponding power cells 24₁, 24₂, ..., 24ₙ of a power storage unit 24 and output terminals connected to corresponding input terminals of switching networks 316₁, 316₂, ..., 316ₙ. Filter section 322₁ has input terminals 322₁I1 and 322_{C}I1 and output terminals 322₁O1, 322₁O2, and 322_{C}O1; filter section 322₂ has input terminals 322_{C}I1 and 322_{C}I2 and output terminals 322_{C}O1, 322₂O2, and 322_{C}O2; and filter section 322ₙ has input terminals 322_{C}I(n-1) and 322ₙI2 and output terminals 322_{C}O(n-1), 322ₙO2, and 322ₙO3.

Input terminal 322₁I1 is connected to the positive terminal of power cell 24₁ and input terminal 322_{C}I1 is connected to the negative and positive terminals of power cells 24₁ and 24₂, respectively. Input terminal 322_{C}I(n-1) is connected to the positive terminal of power cell 24ₙ and input terminal 322ₙI2 is connected to the negative terminal of power cell 24ₙ.

Filter section 322₁ comprises impedance elements 334₁ and 334₂ and energy storage element 336₁, wherein energy storage element 336₁ has a terminal connected to input pin 312P_{A} and a terminal connected to input pin 312P₃. Output terminal 322₁O1 is connected to input pin 312P₁. Input terminal 322_{C}I1 is connected to output terminal 322_{C}O1 through impedance element 334₂ and output terminal 322_{C}O1 is connected to input pin 312P₄. It should be noted that impedance element 334₂ is common to filter sections 322₁ and 322₂. By way of example, impedance elements 334₁ and 334₂ are resistors and energy storage element 336₁ is a capacitor.

Filter section 322₂ comprises impedance element 334₂ and energy storage element 336₂. Output terminal 322_{C}O1 is connected to input pin 312P₄. A terminal of energy storage element 336₂ is connected to input pin 312P₃ and the other terminal of capacitor 336₂ is connected to input pin 312P₆. By way of example, impedance element 334₂ is a resistor and energy storage element 336₂ is a capacitor. It should be noted that similar shared components and connections exist between filter section 322₂ and another filter section connected to filter section 322₂ as exist between filter section 322₁ and filter section 322₂. For the sake of clarity, not all components of filter section 322₂ are shown.

Filter section 322ₙ comprises impedance elements 334ₙ and 334₍ₙ₊₁₎ and energy storage element 336ₙ. Output terminal 322_{C}O(n-1) is connected to input pin 312P₍₃ₙ₋₂₎. Input terminal 322_{C}I(n-1) is connected to output terminal 322_{C}O(n-1) through impedance element 334ₙ. Input terminal 322ₙI2 is connected to output terminal 322ₙO3 through impedance element 334₍ₙ₊₁₎. A terminal of energy storage element 336ₙ is connected to input pin 312P₆ and the other terminal of energy storage element 336ₙ is connected to input pin 312P₃ₙ. By way of example, impedance elements 334ₙ and 334₍ₙ₊₁₎ are resistors and energy storage element 336ₙ is a capacitor.

In accordance with another embodiment, the polarities of the cells are switched such that the cells have the opposite polarities shown in the figures.

Still referring to FIG. 15, switching networks 316₁, ..., 316ₙ operate in at least three different operating modes including a filtering continuous observation mode, a sample and hold mode, and an internal balancing mode. As discussed above, the operating mode may be selected in accordance with the states of switching elements 326A, 326₁,..., 326ₙ, 328₁, ..., 328ₙ, and 331₁, ..., 331ₙ, i.e., combinations in which these switching elements are opened or closed.

In the filtering continuous observation operating mode, the voltages across power cells 24₁, ..., 24ₙ are monitored by configuring switching elements 326₁, ..., 326ₙ, and 328₁, ..., 328ₙ, to be opened and switching elements 331₁, ..., 331ₙ, and 326A to be closed. For example, the voltage across power cell 24₁ can be monitored in response to MUX 18 being configured to transmit the voltage at output terminals 316_{A}O1 and 316₁O3 to ADC 20. Thus, a voltage representing the filtered voltage of power cell 24₁ is transmitted to ADC 20, thereby observing or monitoring the voltage across power cell 24₁. Similarly, the voltage across power cell 242 can be monitored in response to MUX 18 being configured to transmit the voltage at output terminals 316₁O3 and 316₂O3 to ADC 20. Thus, a voltage representing the filtered voltage of power cell 24₂ is transmitted to ADC 20, thereby observing or monitoring the voltage across power cell 24₂. The voltage across power cell 24ₙ can be monitored in response to MUX 18 being configured to transmit the voltage at output terminals 316₍ₙ₋₁₎O3 and 316ₙO3 to ADC 20. Thus, a voltage representing the filtered voltage of power cell 24ₙ is transmitted to ADC 20, thereby observing or monitoring the voltage across power cell 24ₙ.

In the differential sample and hold operating mode, the voltages across power cells 24₁, ..., 24ₙ can be sampled and stored or held by applying proper control voltages V326A, V326₁, ..., V326ₙ, V328₁, ..., V328ₙ and V331₁, ..., V331ₙ to the control terminals of switching elements 326A, 326₁, ..., 326ₙ, 328₁, ..., 328ₙ and 331₁, ..., 331ₙ, respectively. For sampling, the switching elements are configured to enable the filtering continuous observation mode. In response to these switching element configurations, capacitors 336₁, ..., 336ₙ are charged to voltages substantially equal to the voltages across power cells 24₁, ..., 24ₙ i.e., capacitors 336₁, ..., 336ₙ sample the voltages of power cells 24₁, ..., 24ₙ. Capacitors 336₁, ..., 336ₙ serve as filters and filter the sampled signals. It should be noted that the on-resistances (Rdson's) of switching elements 326A and 331₁, ..., 331ₙ, are in series with both terminals of capacitors 336₁, ..., 336ₙ, which reduces issues associated with common mode noise.

After sampling the voltages of power cells 24₁, ..., 24ₙ, the information is held on capacitors 336₁, ..., 336ₙ by applying control signals V326A and V331₁, ..., V331ₙ to the control terminals of switching elements 326_{A} and 331₁, ..., 331ₙ, respectively, that are suitable for opening these switching elements. The switching elements 326₁, ..., 326ₙ and 328₁, ..., 328ₙ remain open, i.e., they keep the same state as in the filtering continuous observation mode. In response to this switching element configuration, capacitors 336₁, ..., 336ₙ are isolated from the stack of power cells 24₁, ..., 24ₙ, thereby holding the voltages that appeared on power cells 24₁, ..., 24ₙ.

The sampled voltage representing the voltage of power cell 24₁ can be monitored in response to MUX 18 being configured to transmit the voltage at output terminals 316_{A}O1 and 316₁O3 to the analog-to-digital converter 20. In response to MUX 18 being configured to transmit the voltage at output terminals 316₁O3 and 316₂O3 to ADC 20, a sampled voltage representing the voltage of power cell 24₂ is transmitted to ADC 20. In response to MUX 18 being configured to transmit the voltage at output terminals 316₍ₙ₋₁₎O3 and 316ₙO3 to ADC 20, a sampled voltage representing the voltage of power cell 24ₙ is transmitted to ADC 20.

In the internal balancing operating mode, switching elements 331₁, ..., 331ₙ and 362A are opened or closed while the voltage across power cells 24₁, ..., 24ₙ is balanced using switching elements 326₁, ..., 326ₙ and 328₁, ..., 328ₙ in a similar manner as described with reference to FIG. 6 and switching elements 26₁, ..., 26ₙ and 28₁, ..., 28n.

It should be noted that switching elements 328₁, 328₂, ..., 328ₙ are optional elements and in accordance with embodiments in which switching elements 328₁, 328₂, ..., 328ₙ are absent, output terminal 316₁O2 is shorted to output terminal 316₁O4, output terminal 316₂O2 is shorted to output terminal 316₂O4, and output terminal 316ₙO2 is shorted to output terminal 316ₙO4, respectively.

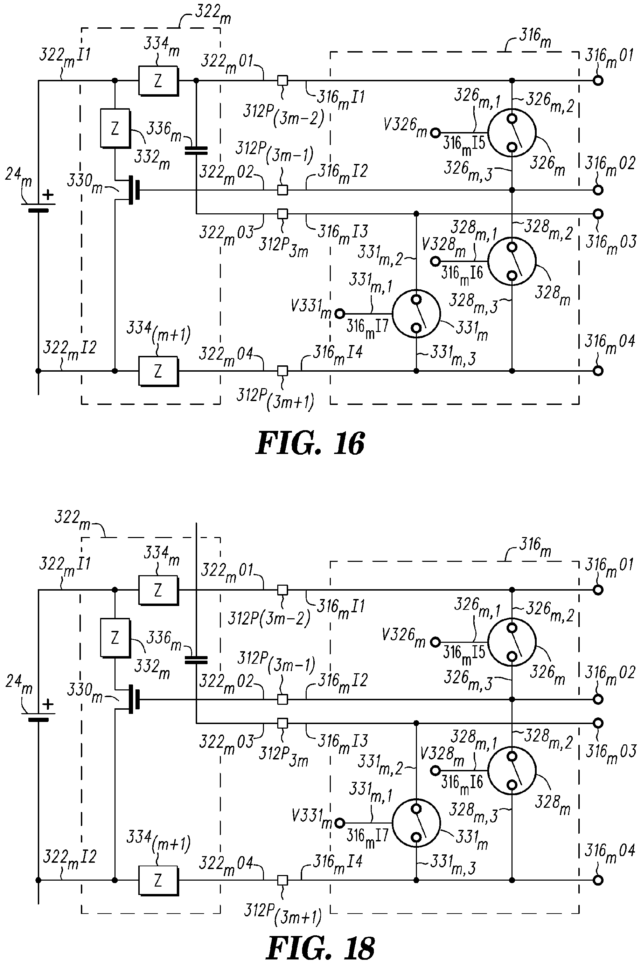

FIG. 16 is a circuit schematic of a switching section 316ₘ of interface network 316 (described with reference to FIG. 11) connected to a power cell 24 through a filter section 322 in accordance with another embodiment of the present invention. It should be noted that switching networks 316₁, 316₂, ..., 316ₙ in FIGs. 13, 15, and 17 are comprised of switching sections 316ₘ and that the variable m is used to represent integers 1, 2, ..., n. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n.

Switching section 316ₘ has been described with reference to FIG. 12. By way of example, switching elements 326ₘ and 328ₘ form a simple transistor pre-driver circuit but they can be replaced by any other pre-driver circuit capable of driving an external balancing element of any polarity.

Filter section 322ₘ in FIG. 16 is similar to the filter section described with reference to FIG. 12, except that it includes balancing elements 330ₘ and 332ₘ. Balancing element 330m can be an NPN bipolar transistor, a PNP bipolar transistor, an N-channel MOSFET, a P-channel MOSFET, or the like. By way of example, balancing elements 330ₘ and 332ₘ are an N-channel MOSFET transistor and a resistor, respectively. N-channel MOSFET 330ₘ has a drain terminal connected to input terminal 322ₘI1 through resistor 332ₘ, a source terminal connected to input terminal 322ₘI2, and a gate terminal that serves as or, alternatively, is connected to output terminal 322ₘO2, which output terminal is connected to input pin 312P₍₃ₘ₋₁₎. Output terminal 322ₘO1 is connected to input terminal 322ₘI1 through impedance element 334ₘ. An energy storage element 336ₘ has a terminal connected to input pin 312P₍₃ₘ₋₂₎ and a terminal connected to input pin 312P₃ₘ. By way of example, impedance elements 334ₘ and 334₍ₘ₊₁₎ are resistors and energy storage element 336ₘ is a capacitor. Resistors 332ₘ and 334ₘ each have a terminal commonly connected together to form a node that is connected to or, alternatively, forms input terminal 322ₘI1. The other terminal of resistor 332ₘ is connected to the drain terminal of transistor 330ₘ and the other terminal of resistor 334ₘ is connected to a terminal of capacitor 336ₘ to form a node that serves as or, alternatively, may be connected to an output terminal 322ₘO1. As mentioned above, the other terminal of capacitor 336ₘ is connected to output pin 312P₃ₘ. Resistor 334₍ₘ₊₁₎ has a terminal that is connected to the source terminal of transistor 330ₘ to form a node that may be connected to or, alternatively, serves as input terminal 322ₘI2 and a terminal that serves as or, alternatively, is connected to output terminal 322ₘO4.

Power cell 24ₘ comprises a battery cell having a positive terminal connected to input terminal 322ₘI1 of filter section 322ₘ and a negative terminal connected to input terminal 322ₘI2 of filter section 322ₘ.

It should be noted that output terminal 322ₘO1 is electrically connected to input pin 312P₍₃ₘ₋₂₎, output terminal 322ₘO2 is electrically connected to input pin 312P₍₃ₘ₋₁₎, and output terminal 322ₘO4 is electrically connected to input pin 312P₍₃ₘ₊₁₎.

Still referring to FIG. 16, switching section 316ₘ operates in at least three different operating modes including a filtering continuous monitoring or observation mode, a sample and hold mode, and a balancing mode. In the filtering continuous observation operating mode, the voltage across power cell 24ₘ is monitored by applying control voltage V326ₘ to the control terminal of switching element 326ₘ that is suitable for opening this switching element and applying control voltages V328ₘ and V331ₘ to the control terminals of switching elements 328ₘ and 331ₘ, respectively, that are suitable for closing these switching elements. Thus, the filtered voltage across power cell 24ₘ appears at output terminals 316ₘO1 and 316ₘO3. MUX 18 (shown in FIG. 11) is configured to transmit the voltage at output terminals 316ₘO1 and 316ₘO3 to ADC 20. Thus, a voltage representing the filtered voltage of power cell 24ₘ is transmitted to ADC 20, thereby observing or monitoring the voltage across power cell 24ₘ.

In the sample and hold operating mode, the voltage across power cell 24ₘ can be sampled and stored or held by applying a control voltage V326ₘ to the control terminal of switching element 326ₘ that is suitable for opening this switching element and applying control voltages V328ₘ and V331ₘ to the control terminals of switching elements 328ₘ and 331ₘ, respectively, that are suitable for closing these switching elements. Capacitor 336ₘ is charged to a voltage substantially equal to the voltage across power cell 24ₘ, i.e., capacitor 336ₘ samples the voltage of power cell 24ₘ.

After sampling the voltage on power cell 24ₘ, the control voltage V331ₘ suitable for opening switching element 331ₘ is applied to the control terminal of switching element 331ₘ whereas control voltages V326ₘ and V328ₘ suitable for maintaining switching elements 326ₘ and 328ₘ in open and closed configurations, respectively, are maintained at the control terminals of switching elements 326ₘ and 328ₘ. Thus, the sampled voltage appearing across capacitor 336ₘ is held and appears across output terminals 316ₘO1 and 316ₘO3. MUX 18 is configured to transmit the voltage at output terminals 316ₘO1 and 316ₘO3 to ADC 20. Thus, a voltage representing the sample and hold voltage of power cell 24ₘ is transmitted to ADC 20.

In the balancing operating mode, the voltage across power cell 24ₘ can be balanced by applying control voltages V326ₘ and V328ₘ to the control terminals of switching elements 326ₘ and 328ₘ, respectively, that are suitable for closing switching element 326ₘ and opening switching element 328ₘ. Accordingly, a balancing current flowing through impedance element 332ₘ and transistor 330ₘ discharges power cell 24ₘ. As discussed with reference to FIG. 12, switching element 326ₘ may be referred to as a balancing switching element and switching element 331ₘ may be referred to as a sampling switching element.

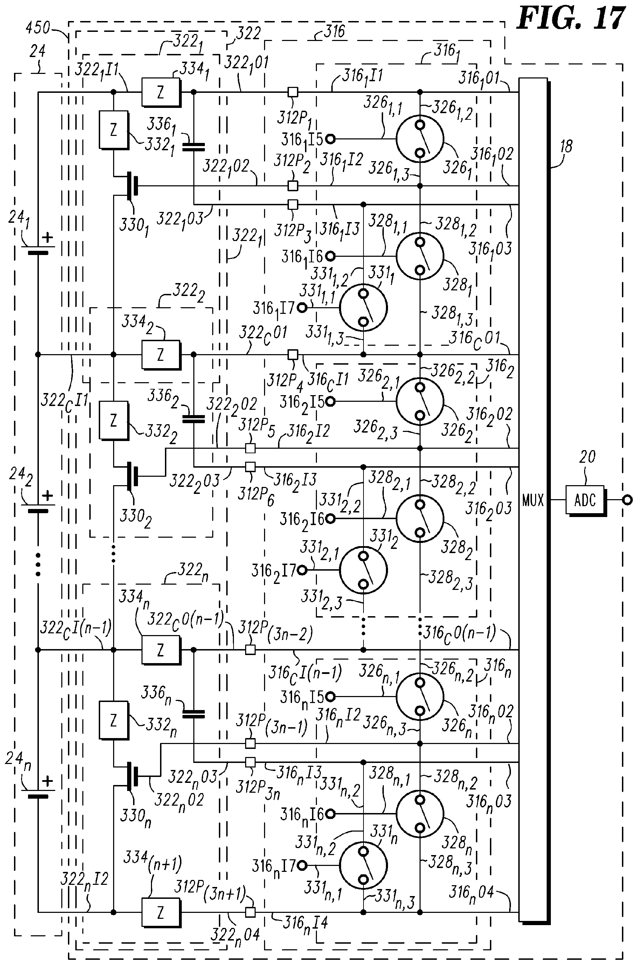

FIG. 17 is a block diagram of a power cell monitor and control module 450 comprising control module 312 and filter circuit 322 as described with reference to FIGs. 11 and 16, but further including embodiments of circuit implementations of filter circuit 322 and interface circuit 316 described with reference to FIG. 16. Control module 450 is connected to a battery unit 24. Control module 450 is similar to control module 350 except that control module 450 includes balancing structures 330₁, 330₂, ..., 330ₙ, and balancing structures 332₁, 332₂, ..., 332ₙ. More particularly and following from the description of control module 350 described with reference to FIG. 13, transistor 330₁ has a drain terminal connected to input terminal 322₁I1 through resistor 332₁, a source terminal connected to input terminal 322_{C}I1, and a gate terminal that is connected to input pin 312P₂. Output terminal 322₁O1 is connected to input terminal 322₁I1 through impedance element 334₁. An energy storage element 336₁ has a terminal connected to input pin 312P₁ and a terminal connected to input pin 312P₃. By way of example, impedance elements 334₁ and 334₂ are resistors and energy storage element 336₁ is a capacitor. Resistors 332₁ and 334₁ each have a terminal commonly connected together to form a node that may be connected to or, alternatively, forms input terminal 322₁I1. The other terminal of resistor 332₁ is connected to the drain terminal of transistor 330₁ and the other terminal of resistor 334₁ is connected to a terminal of capacitor 336₁ to form a node that serves as or, alternatively, may be connected to an output terminal 322₁O1. Resistor 334₂ has a terminal that is connected to the source terminal of transistor 330₁ to form a node that may be connected to or, alternatively, may serve as input terminal 322_{C}I1 and a terminal that may serve as or, alternatively, may be connected to output terminal 322_{C}O1.

Transistor 330₂ has a drain terminal connected to input terminal 322_{C}I1 through resistor 332₂, a source terminal connected to input terminal 322_{C}I(n-1), and a gate terminal that is connected to input pin 312P₅. Output terminal 322_{C}O1 is connected to input terminal 322_{C}I1 through impedance element 334₂. An energy storage element 336₂ has a terminal connected to input pin 312P₄ and a terminal connected to input pin 312P₆. By way of example, impedance element 334₂ is a resistor and energy storage element 336₂ is a capacitor. Resistors 332₂ and 334₂ each have a terminal commonly connected together to form a node that may be connected to or, alternatively, forms input terminal 322_{C}I1. The other terminal of resistor 332₂ is connected to the drain terminal of transistor 330₂ and the other terminal of resistor 334₂ is connected to a terminal of capacitor 336₂ to form a node that serves as or, alternatively, may be connected to an output terminal 322_{C}O1. It should be noted that similar shared components and connections exist between filter section 322₂ and another filter section connected to filter section 322₂ as exists between filter section 322₁ and filter section 322₂. For the sake of clarity, not all components of filter section 322₂ are shown.

Transistor 330ₙ has a drain terminal connected to input terminal 322_{C}I(n-1) through resistor 332ₙ, a source terminal connected to input terminal 322ₙI2, and a gate terminal that is connected to input pin 312P₍₃ₙ₋₁₎. Output terminal 322ₙO4 is connected to input terminal 322ₙI2 through impedance element 334₍ₙ₊₁₎. An energy storage element 336ₙ has a terminal connected to input pin 312P₍₃ₙ₋₂₎ and a terminal connected to input pin 312P₃ₙ. By way of example, impedance element 334₍ₙ₊₁₎ is a resistor and energy storage element 336ₙ is a capacitor. Resistors 332ₙ and 334ₙ each have a terminal commonly connected together to form a node that is connected to or, alternatively, forms input terminal 322_{C}I(n-1). The other terminal of resistor 332ₙ is connected to the drain terminal of transistor 330ₙ and the other terminal of resistor 334ₙ is connected to a terminal of capacitor 336ₙ to form a node that serves as or, alternatively, is connected to an output terminal 322_{C}O(n-1). Resistor 334₍ₙ₊₁₎ has a terminal that is connected to the source terminal of transistor 330ₙ to form a node that may be connected to or, alternatively, serves as input terminal 322ₙI2 and a terminal that serves as or, alternatively, may be connected to output terminal 322ₙO4, which output terminal may be connected to input pin 312P₍₃ₙ₊₁₎.

Still referring to FIG. 17, switching sections 316₁, ..., 316ₙ operate in at least three different operating modes including a filtering continuous observation mode, a sample and hold mode, and a balancing mode. As discussed with reference to FIG. 16, the operating mode may be selected in accordance with the states of switching elements 326₁, ..., 326ₙ, 328₁, ..., 328ₙ, and 331₁ ..., 331ₙ, i.e., combinations in which these switching elements are opened or closed.

FIG. 18 is a circuit schematic of a switching section 316ₘ of interface network 316 (described with reference to FIG. 11) connected to a power cell 24ₘ through a filter section 322ₘ in accordance with another embodiment of the present invention. It should be noted that switching networks 316₁, 316₂, ..., 316ₙ in FIG. 11 are comprised of switching sections 316ₘ and that the variable m is used to represent integers 1, 2, ..., n. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n. Switching section 316ₘ of FIG. 18 is similar to switching section 316ₘ of FIG. 16, except that one of the terminals of capacitor 336ₘ is not connected to input pin 312P₁. Thus, capacitor 336ₘ has a terminal connected to input pin 312P₃ₘ but its other terminal is not connected to input pin 312P₍₃ₘ₋₁₎. As discussed with reference to FIG. 12, switching element 326ₘ may be referred to as a balancing switching element and switching element 331ₘ may be referred to as a sampling switching element.

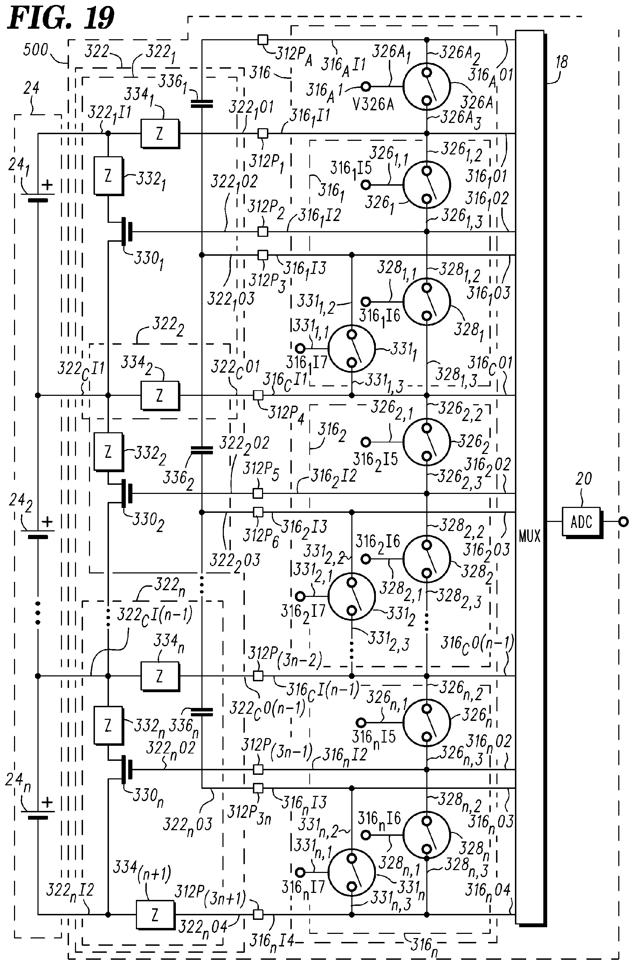

FIG. 19 is a block diagram of a power cell monitor and control module 500 comprising control module 312 and filter circuit 322 as described with reference to FIGs. 11 and 17, but further including embodiments of circuit implementations of filter circuit 322 and interface circuit 316 described with reference to FIG. 18. Control module 500 is connected to a battery unit 24. Control module 500 is similar to control module 400 except that control module 500 includes balancing structures 330₁, 330₂, ..., 330ₙ, and balancing structures 332₁, 332₂, ..., 332ₙ. More particularly and following from the description of control module 400 described with reference to FIG. 15, transistor 330₁ has a drain terminal connected to input terminal 322₁I1 through resistor 332₁, a source terminal connected to input terminal 322_{C}I1, and a gate terminal that is connected to input pin 312P₂. Output terminal 322₁O1 is connected to input terminal 322₁I1 through impedance element 334₁. An energy storage element 336₁ has a terminal connected to input pin 312P_{A} and a terminal connected to input pin 312P₃. By way of example, impedance elements 334₁ and 334₂ are resistors and energy storage element 336₁ is a capacitor. Resistors 332₁ and 334₁ each have a terminal commonly connected together to form a node that may be connected to or, alternatively, may form input terminal 322₁I1. The other terminal of resistor 332₁ is connected to the drain terminal of transistor 330₁ and the other terminal of resistor 334₁ is connected to input pin 312P₁ via an output terminal 322₁O1. Resistor 334₂ has a terminal that is connected to the source terminal of transistor 330₁ to form a node that may be connected to or, alternatively, may serve as input terminal 322_{C}I1 and a terminal that serves as or, alternatively, may be connected to output terminal 322_{C}O1, which output terminal may be connected to input pin 312P₄.

Transistor 330₂ has a drain terminal connected to input terminal 322_{C}I1 through resistor 332₂, a source terminal connected to input terminal 322_{C}I(n-1), and a gate terminal that is connected to input pin 312P₅ via an output terminal 322₂O2. Output terminal 322_{C}O1 is connected to input terminal 322_{C}I1 through impedance element 334₂. An energy storage element 336₂ has a terminal connected to input pin 312P₃ and a terminal connected to input pin 312P₆. By way of example, impedance element 334₂ is a resistor and energy storage element 336₂ is a capacitor. Resistors 332₂ and 334₂ each have a terminal commonly connected together to form a node that may be connected to or, alternatively, may form input terminal 322_{C}I1. The other terminal of resistor 332₂ is connected to the drain terminal of transistor 330₂ and the other terminal of resistor 334₂ is connected to an input pin 312P₄ via an output terminal 322_{C}O1. It should be noted that similar shared components and connections exist between filter section 322₂ and another filter section connected to filter section 322₂ as exist between filter section 322₁ and filter section 322₂. For the sake of clarity, not all components of filter section 322₂ are shown.

Transistor 330ₙ has a drain terminal connected to input terminal 322_{C}I(n-1) through resistor 332ₙ, a source terminal connected to input terminal 322ₙI2, and a gate terminal that is connected to input pin 312P₍₃ₙ₋₁₎ via an output terminal 322ₙO2. Output terminal 322ₙO4 is connected to input terminal 322ₙI2 through impedance element 334₍ₙ₊₁₎. An energy storage element 336ₙ has a terminal connected to input pin 312P₃ₙ. By way of example, impedance element 334₍ₙ₊₁₎ is a resistor and energy storage element 336ₙ is a capacitor. Resistors 332ₙ and 334ₙ each have a terminal commonly connected together to form a node that may be connected to or, alternatively, may form input terminal 322_{C}I(n-1). The other terminal of resistor 332ₙ is connected to the drain terminal of transistor 330ₙ and the other terminal of resistor 334ₙ is connected to input pin 312P₍₃ₙ₋₂₎ via an output terminal 322_{C}O(n-1). Resistor 334₍ₙ₊₁₎ has a terminal that is connected to the source terminal of transistor 330ₙ to form a node that may be connected to or, alternatively, serves as input terminal 322ₙI2 and a terminal that serves as or, alternatively, may be connected to output terminal 322ₙO4, which output terminal 322ₙO4 is connected to input pin 312P₍₃ₙ₊₁₎.

In accordance with another embodiment, the polarities of the cells are switched such that the cells have the opposite polarities shown in the figures. Alternatively, the n-channel transistors can be replaced by p-channel transistors.

Still referring to FIG. 19, switching sections 316₁, ..., 316ₙ operate in at least three different operating modes including a filtering continuous observation mode, a differential sample and hold mode, and a balancing mode. As discussed above, the operating mode may be selected in accordance with the states of switching elements 326A, 326₁, ..., 326ₙ, 328₁, ..., 328ₙ, and 331₁, ..., 331ₙ, i.e., combinations in which these switching elements are opened or closed.

In the filtering continuous observation operating mode, the voltages across power cells 24₁, ..., 24ₙ are monitored by configuring switching elements 326₁, ..., 326ₙ, to be opened and switching elements 328₁, ..., 328ₙ, 331₁, ..., 331ₙ, and 326A to be closed. The voltages across power cells 24₁, ..., 24ₙ can be monitored by ADC 20 by configuring MUX 18 using techniques similar to those described with reference to FIG 15.

In the differential sample and hold operating mode, the voltages across power cells 24₁, ..., 24ₙ can be sampled and stored or held by applying proper control voltages V326A, V326₁, ..., V326ₙ, V328₁, ..., V328ₙ and V331₁, ..., V331ₙ to the control terminals of switching elements 326A, 326₁, ..., 326ₙ, 328₁, ..., 328ₙ and 331₁, ..., 331ₙ, respectively. For sampling, the switching elements are configured to enable the filtering continuous observation mode. In response to these switching element configurations, capacitors 336₁, ..., 336ₙ are charged to voltages substantially equal to the voltages across power cells 24₁, ..., 24ₙ i.e., capacitors 336₁, ..., 336ₙ sample the voltages of power cells 24₁, ..., 24ₙ. Capacitors 336₁, ..., 336ₙ serve as filters and filter the sampled signals. It should be noted that the on-resistances (Rdson's) of switching elements 326A and 331₁, ..., 331ₙ,are in series with both terminals of capacitors 336₁, ..., 336ₙ, which reduces issues associated with common mode noise.

After sampling the voltages of power cells 24₁, ..., 24ₙ, the information is held on capacitors 336₁, ..., 336ₙ by applying control signals V326A and V331₁,..., V331ₙ to the control terminals of switching elements 326_{A} and 331₁, ..., 331ₙ, respectively, that are suitable for opening these switching elements. The switching elements 326₁, ..., 326ₙ and 328₁, ..., 328ₙ do not change state, i.e. they keep the same state as in the filtering continuous observation mode. In response to this switching configuration, capacitors 336₁, ..., 336ₙ are isolated from the stack of power cells 24₁, ..., 24ₙ, thereby holding the voltages that appeared on power cells 24₁, ..., 24ₙ.

The sampled and hold voltages across power cells 24₁, ..., 24ₙ can be monitored by ADC 20 by configuring MUX 18 in much the same way as described with reference to FIG 15.

In the balancing operating mode, switching elements 331₁, ..., 331ₙ and 362A are opened or closed while the voltage across power cells 24₁, ..., 24ₙ is balanced using techniques similar to those described with reference to FIGs. 16 and 17.

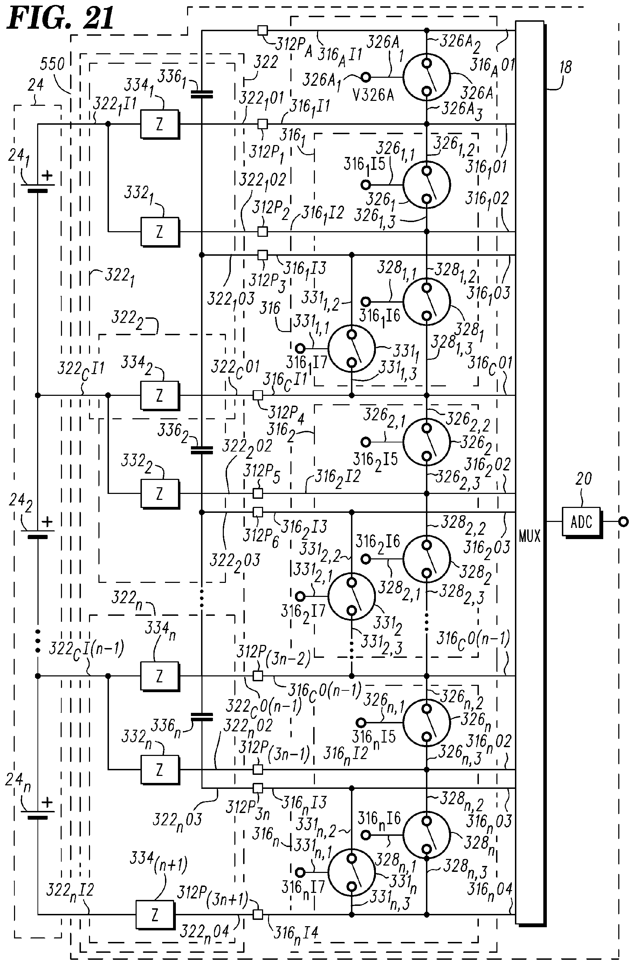

FIG. 20 is a circuit schematic of a switching section 316ₘ of interface network 316 (described with reference to FIG. 11) connected to a power cell 24 through a filter section 322 in accordance with another embodiment of the present invention. It should be noted that switching networks 316₁, 316₂, ..., 316ₙ in FIG. 21 are comprised of switching sections 316ₘ and that the variable m is used to represent integers 1, 2, ..., n. For example, switching network 316₁ corresponds to switching section 316ₘ, where m is replaced by 1, switching network 316₂ corresponds to switching section 316ₘ, where m is replaced by 2, and switching network 316ₙ corresponds to switching section 316ₘ, where m is replaced by n.

Switching section 316ₘ has been described with reference to FIG. 12. It should be noted that switching element 326ₘ is an optional circuit element that is used for balancing in embodiments in which balancing resistor 332ₘ is absent such as the embodiment shown in FIG. 12.

Filter section 322ₘ is similar to the filter section described with reference to FIG. 14, except that it includes a balancing element 332ₘ. Output terminal 322ₘO1 is connected to input terminal 322ₘI1 through impedance element 334ₘ. An energy storage element 336ₘ has a terminal connected to input pin 312P₃ₘ. By way of example, balancing element 332ₘ and impedance elements 334ₘ and 334₍ₘ₊₁₎ are resistors and energy storage element 336ₘ is a capacitor. Resistors 332ₘ and 334ₘ each have a terminal commonly connected together to form a node that may be connected to or, alternatively, may form input terminal 322ₘI1. The other terminal of resistor 332ₘ is connected to input pin 312P₍₃ₘ₋₁₎ via output terminal 322ₘO2. One terminal of capacitor 336ₘ may be connected to or, alternatively, serves as output terminal 322ₘO3, which output terminal is connected to input pin 312P₃ₘ. The other terminal of capacitor 336m may be connected to other circuitry as shown in FIG. 21. Resistor 334₍ₘ₊₁₎ has a terminal that may be connected to or, alternatively, serves as input terminal 322ₘI2 and a terminal that serves as or, alternatively, is connected to output terminal 322ₘO4.

Power cell 24ₘ comprises a battery cell having a positive terminal connected to input terminal 322ₘI1 of filter section 322ₘ and a negative terminal connected to input terminal 322ₘI2 of filter section 322ₘ.

It should be noted that output terminal 322ₘO1 is electrically connected to input pin 312P₍₃ₘ₋₂₎, output terminal 322ₘO2 is electrically connected to input pin 312P₍₃ₘ₋₁₎, output terminal 322ₘO3 is electrically connected to input pin 312P₃ₘ, and output terminal 322ₘO4 is electrically connected to input pin 312P₍₃ₘ₊₁₎.

FIG. 21 is a block diagram of a power cell monitor and control module 550 comprising control module 312 and filter circuit 322 as described with reference to FIG. 11, but further including embodiments of circuit implementations of filter circuit 322 and interface circuit 316 described with reference to FIG. 20. Control module 550 is connected to a battery unit 24. Control module 550 is similar to control module 500 except that control module 550 includes balancing structures 332₁, 332₂, ..., 332ₙ, but not balancing structures 330₁, 330₂, ..., 330ₙ. More particularly and following from the description of control module 500 described with reference to FIG. 19, output terminal 322₁O1 is connected to input terminal 322₁I1 through impedance element 334₁. An energy storage element 336₁ has a terminal connected to input pin 312P_{A} and a terminal connected to input pin 312P₃. By way of example, balancing element 332₁ and impedance elements 334₁ and 334₂ are resistors and energy storage element 336₁ is a capacitor. Resistors 332₁ and 334₁ each have a terminal commonly connected together to form a node that may be connected to or, alternatively, may form input terminal 322₁I1. The other terminal of resistor 332₁ may be connected to or alternatively may serve as output terminal 322₁O2 and the other terminal of resistor 334₁ is connected to a terminal of capacitor 336₁ and may form a node that serves as or, alternatively, may be connected to an output terminal 322₁O1. Output terminal output terminal 322₁O1 is connected to input pin 312P₁ and output terminal 322₁O2 is connected to input pin 312P₂. Resistor 334₂ has a terminal that is connected to or, alternatively, serves as input terminal 322_{C}I1 and a terminal that may serve as or, alternatively, may be connected to output terminal 322_{C}O1.

Output terminal 322_{C}O1 is connected to input terminal 322_{C}I1 through impedance element 334₂. An energy storage element 336₂ has a terminal connected to input pin 312P₃ and a terminal connected to input pin 312P₆. By way of example, balancing element 332₂ and impedance element 334₂ are resistors and energy storage element 336₂ is a capacitor. Resistors 332₂ and 334₂ each have a terminal commonly connected together to form a node that may be connected to or, alternatively, may form input terminal 322_{C}I1. The other terminal of resistor 332₂ is connected to or, alternatively, serves as output terminal 322₂O2 and the other terminal of resistor 334₂ may serve as or, alternatively, may be connected to an output terminal 322_{C}O1. Output terminal 322₂O2 is connected to input pin 312P₅. It should be noted that similar shared components and connections exist between filter section 322₂ and another filter section connected to filter section 322₂ as exist between filter section 322₁ and filter section 322₂. For the sake of clarity, not all components of filter section 322₂ are shown.

Output terminal 322ₙO4 is connected to input terminal 322ₙI2 through impedance element 334₍ₙ₊₁₎. An energy storage element 336ₙ has a terminal connected to input pin 312P₃ₙ and may serve as output terminal 322ₙO3. By way of example, balancing element 332ₙ and impedance element 334₍ₙ₊₁₎ are resistors and energy storage element 336ₙ is a capacitor. Resistors 332ₙ and 334ₙ each have a terminal commonly connected together to form a node that may be connected to or, alternatively, may form input terminal 322_{C}I(n-1). The other terminal of resistor 332ₙ may be connected to or, alternatively, serves as output terminal 332ₙO2 which may be connected to input pin 312P₍₃ₙ₋₁₎ and the other terminal of resistor 334ₙ may be connected to input pin 312P₍₃ₙ₋₂₎. Resistor 334₍ₙ₊₁₎ has a terminal that is connected to or, alternatively, may serve as input terminal 322ₙI2 and a terminal that may serve as or, alternatively, may be connected to output terminal 322ₙO4 which output terminal may be connected to input pin 312P₍₃ₙ₊₁₎.

In accordance with another embodiment, the polarities of the cells are switched such that the cells have the opposite polarities shown in the figures.

Still referring to FIG. 21, switching networks 316₁, ..., 316ₙ operate in at least three different operating modes including a filtering continuous observation mode, a differential sample and hold mode, and a balancing mode. As discussed above, the operating mode may be selected in accordance with the states of switching elements 326A, 326₁, ..., 326ₙ, 328₁, ..., 328ₙ, and 331₁, ..., 331ₙ, i.e., combinations in which these switching elements are opened or closed.

In the filtering continuous observation operating mode, the voltages across power cells 24₁, ..., 24ₙ are monitored by configuring switching elements 326₁, ..., 326ₙ, and 328₁, ..., 328ₙ, to be opened and switching elements 331₁, ..., 331ₙ, and 326A to be closed. The voltages across power cells 24₁, ..., 24ₙ can be monitored by ADC 20 by configuring MUX 18 in much the same way as described with reference to FIG 15.

In the differential sample and hold operating mode, the voltages across power cells 24₁, ..., 24ₙ can be sampled and stored or held and monitored by ADC 20 using techniques and switching configurations similar to those described with reference to FIG. 19.

In the balancing operating mode, switching elements 331₁, ..., 331ₙ and 362A are open or closed. For balancing power cell 24₁, switching element 326₁ is open and switching element 328₁ is closed. Accordingly, a balancing current flowing through impedance element 332₁, switching element 328₁ and impedance element 334₂ discharges power cell 24₁. It should be noted that the voltages across the other power cells may be balanced using similar techniques. As discussed with reference to FIG. 12, switching element 328ₘ may be referred to as a balancing switching element and switching element 331ₘ may be referred to as a sampling switching element. It should be noted that switching elements 326₁, ..., 326ₙ are optional circuit elements that may be omitted.

FIG. 22 is a circuit schematic of a switching section 316Aₘ of interface network 316 (described with reference to FIGs. 14 and 15) connected to a power cell 24ₘ through a filter section 322ₘ in accordance with another embodiment of the present invention. Switching section 316Aₘ is similar to switching section 316ₘ described with reference to FIG. 14, except current control element 328ₘ, input pin 312P₍₃ₘ₋₁₎, terminal 316ₘI2, and terminal 316ₘO2 are absent, conduction terminal 326_{m,3} of current control element 326ₘ is connected to conduction terminal 331_{m,3} of switching element 331ₘ, and switching section 316Aₘ further includes a filtering impedance element Z_{f} that is connected to switching element 331ₘ. Although filtering impedance element Z_{f} is shown as being connected between terminal 331_{m,2} and terminal 316ₘI3, this is not a limitation of the present invention. For example, filtering impedance element Z_{f} may be connected between terminal 331ₘ,₃ and terminal 316ₘI4.

Accordingly, FIG. 22 illustrates an embodiment comprising partial integration of a filter impedance element with a filter resistance in the sample and hold path. In accordance with this embodiment, the over-all impedance of the balancing path is decoupled from the filter function, which is beneficial for using filter section 322ₘ of FIG. 22 in embodiments such as those illustrated in FIGs. 14, 15, 20, and 21 where the balancing currents may be high or elevated and impedance elements 334m and 334(m+1) are ohmic resistances having low resistance values. Including impedance element Z_{f} allows the use of smaller filter storage elements 336ₘ that are substantially independent from impedance elements 334ₘ and 334₍ₘ₊₁₎.

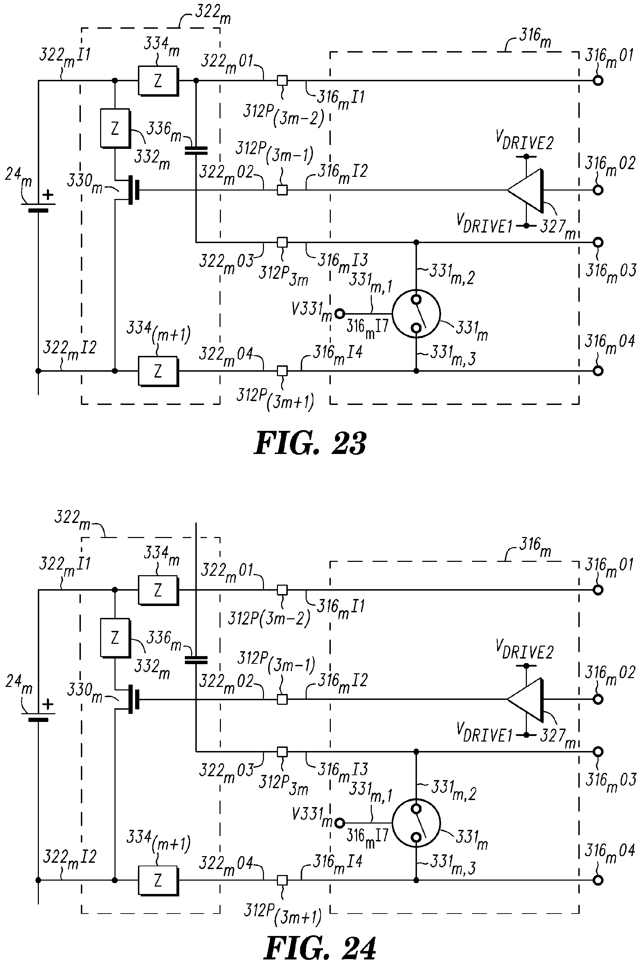

FIG. 23 is a circuit schematic of a switching section 316ₘ of interface network 316 (described with reference to FIG. 11) connected to a power cell 24 through a filter section 322 in accordance with another embodiment of the present invention. The embodiment of FIG. 23 is similar to that of FIG. 16, wherein switching elements 326ₘ and 328ₘ are replaced by a pre-driver 327ₘ having an output connected to output pin 312P₍₃ₘ₋₁₎ and an input connected to output terminal 316ₘO2. Pre-driver 327ₘ has a terminal coupled for receiving a drive signal V_{DRIVE1} and a terminal coupled for receiving a drive signal V_{DRIVE2}. It should be noted that switching elements similar to switching elements 326ₘ and 328ₘ are included within pre-driver 327ₘ.

FIG. 24 is a circuit schematic of a switching section 316ₘ of interface network 316 (described with reference to FIG. 11) connected to a power cell 24 through a filter section 322 in accordance with another embodiment of the present invention. The embodiment of FIG. 24 is similar to that of FIG. 18, wherein switching elements 326ₘ and 328ₘ are replaced by a pre-driver 327ₘ having an output connected to output pin 312P₍₃ₘ₋₁₎ and an input connected to output terminal 316ₘO2. Pre-driver 327ₘ has a terminal coupled for receiving a drive signal V_{DRIVE1} and a terminal coupled for receiving a drive signal V_{DRIVE2}. It should be noted that switching elements similar to switching elements 326ₘ and 328ₘ are included within pre-driver 327ₘ.

Although specific embodiments have been disclosed herein, those skilled in the art will recognize that modifications and variations to the disclosed embodiments can be made. It is intended to encompass all such modifications and variations that fall within the scope of the invention, as defined in the appended claims. For example, the polarities of the cells may be switched such that the cells have the opposite polarities shown in the figures. Alternatively, the n-channel transistors can be replaced by p-channel transistors.

## Claims

1. A monitor and control circuit (100), comprising:
a switching network (16ₙ) having first, second, and third terminals, the switching network (16ₙ) comprising:
a balancing switching element (26ₘ) having a control terminal, a first conduction terminal, and a second conduction terminal, the first conduction terminal of the balancing switching element serving as the first terminal of the switching network; and
a sampling switching element (28ₘ) having a control terminal, a first conduction terminal, and a second conduction terminal, the first conduction terminal of the sampling switching element coupled to the second conduction terminal of the balancing switching element, the monitor and control circuit further comprising:
a filter circuit (22ₘ) having first and second input terminals and first, second, and third output terminals, the first output terminal coupled to the first terminal of the switching network and the third output terminal coupled to the third terminal of the switching network, the filter circuit (22ₘ) comprising:
a first energy storage element (36ₘ) having first and second terminals, the second terminal of the first energy storage element serving as the second output terminal of the filter circuit, wherein the second terminal of the first energy storage element is commonly connected to the second conduction terminal of the balancing switching element and to the first conduction terminal of the sampling switching element;
a first impedance element (34ₘ) having first and second terminals, the first terminal of the first impedance element serving as the first input terminal of the filter circuit and the second terminal of the first impedance element coupled to the first terminal of the first energy storage element and serving as the first output terminal of the filter circuit; and
a second impedance element (34₍ₘ₊₁₎) having first and second terminals, the first terminal of the second impedance element serving as the second input terminal of the filter circuit and the second terminal of the second impedance element coupled to the second conduction terminal of the sampling switching element and to form the third output terminal of the filter circuit;
wherein the first input terminal of the filter circuit (22ₘ) is configured to be connected to a first terminal of a power cell and the second input terminal of the filter circuit (22ₘ) is configured to be connected to a second terminal of the power cell.

2. The monitor and control circuit (100) of claim 1, wherein the sampling switching element (28ₘ) is configured to conduct a balancing current or control an element capable of conducting the balancing current.

3. The monitor and control circuit (100) of claim 1 or 2, wherein the first impedance element (34ₘ) is coupled in series with the balancing switching element (26ₘ).

4. The monitor and control circuit (100) of claim 1, 2, or 3 wherein the switching network further comprises:
a third switching element (26₂) having a control terminal, a first conduction terminal, and a second conduction terminal, the first conduction terminal of the third switching element coupled to the second conduction terminal of the sampling switching element; and
a fourth switching element (28₂) having a control terminal, a first conduction terminal, and a second conduction terminal, the first conduction terminal of the fourth switching element (28₂) coupled to the second conduction terminal of the third switching element (26₂).

5. The monitor and control circuit (100, 200) of claim 1, 2, 3 or 4, wherein the balancing switching element comprises:
a first transistor having a control electrode and first and second current carrying electrodes, the sampling switching element comprises a second transistor having a control electrode and first and second current carrying electrodes, the first impedance element comprises a first resistor, the second impedance element comprises a second resistor, and the first energy storage element comprises a first capacitor (36ₘ).

6. The monitor and control circuit (100) of claim 4, wherein the filter circuit (22ₘ) further comprises:
the first terminal of the second impedance element (34₂) commonly coupled to the second conduction terminal of the sampling switching element (28₁) and the first conduction terminal of the third switching element (26₂);
a third impedance element (34ₙ) having first and second terminals, the first terminal of the third impedance element (34ₙ) coupled to the second conduction terminal of the fourth switching element (28₂); and
a second energy storage element (36₂) having first and second terminals, the first terminal of the second energy storage element coupled to the second terminal of the second impedance element (34₂), the second conduction terminal of the sampling switching element (28₁), and the first conduction terminal of the third switching element (26₂) and the second terminal of the second energy storage element coupled to the commonly connected second conduction terminal of the third switching element and the first conduction terminal of the fourth switching element.

7. The monitor and control circuit (100) of claim 6, wherein the third switching element (26₂) comprises a third transistor having a control electrode and first and second current carrying electrodes, the fourth switching element (28₂) comprises a fourth transistor having a control electrode and first and second current carrying electrodes; and
the third impedance element comprises a third resistor, and the second energy storage element comprises a second capacitor (36₂).

## Patentansprüche

1. Überwachungs- und Steuerschaltung (100), umfassend:
ein Koppelnetzwerk (16ₙ) mit ersten, zweiten und dritten Anschlüssen, wobei das Koppelnetzwerk (16ₙ) umfasst:
ein Ausgleichsschaltelement (26ₘ) mit einem Steueranschluss, einem ersten Leiteranschluss und einem zweiten Leiteranschluss, wobei der erste Leiteranschluss des Ausgleichsschaltelements als der erste Anschluss des Koppelnetzwerks dient; und
ein Abtastschaltelement (28ₘ) mit einem Steueranschluss, einem ersten Leiteranschluss und einem zweiten Leiteranschluss, wobei der erste Leiteranschluss des Abtastschaltelements mit dem zweiten Leiteranschluss des Ausgleichsschaltelements gekoppelt ist, wobei die Überwachungs- und Steuerschaltung ferner umfasst:
eine Filterschaltung (22ₘ) mit ersten und zweiten Eingangsanschlüssen und ersten, zweiten und dritten Ausgangsanschlüssen, wobei der erste Ausgangsanschluss mit dem ersten Anschluss des Koppelnetzwerks gekoppelt ist und der dritte Ausgangsanschluss mit dem dritten Anschluss des Koppelnetzwerks gekoppelt ist, wobei die Filterschaltung (22ₘ) umfasst:
ein erstes Energiespeicherelement (36ₘ) mit ersten und zweiten Anschlüssen, wobei der zweite Anschluss des ersten Energiespeicherelements als der zweite Ausgangsanschluss der Filterschaltung dient, wobei der zweite Anschluss des ersten Energiespeicherelements gemeinsam mit dem zweiten Leiteranschluss des Ausgleichsschaltelements und mit dem ersten Leiteranschluss des Abtastschaltelements verbunden ist;
ein erstes Impedanzelement (34ₘ) mit ersten und zweiten Anschlüssen, wobei der erste Anschluss des ersten Impedanzelements als der erste Eingangsanschluss der Filterschaltung dient und der zweite Anschluss des ersten Impedanzelements mit dem ersten Anschluss des ersten Energiespeicherelements gekoppelt ist und als der erste Ausgangsanschluss der Filterschaltung dient; und
ein zweites Impedanzelement (34₍ₘ₊₁₎) mit ersten und zweiten Anschlüssen, wobei der erste Anschluss des zweiten Impedanzelements als der zweite Eingangsanschluss der Filterschaltung dient und der zweite Anschluss des zweiten Impedanzelements mit dem zweiten Leiteranschluss des Abtastschaltelements gekoppelt ist und den dritten Ausgangsanschluss der Filterschaltung bildet;
wobei der erste Eingangsanschluss der Filterschaltung (22ₘ) konfiguriert ist, um mit einem ersten Anschluss einer Energiezelle verbunden zu werden, und der zweite Eingangsanschluss der Filterschaltung (22ₘ) konfiguriert ist, um mit einem zweiten Anschluss der Energiezelle verbunden zu werden.

2. Überwachungs- und Steuerschaltung (100) nach Anspruch 1, wobei das Abtastschaltelement (28ₘ) konfiguriert ist, um einen Ausgleichsstrom zu leiten oder ein Element zu steuern, das in der Lage ist, den Ausgleichsstrom zu leiten.

3. Überwachungs- und Steuerschaltung (100) nach Anspruch 1 oder 2, wobei das erste Impedanzelement (34ₘ) in Reihe mit dem Ausgleichsschaltelement (26ₘ) gekoppelt ist.

4. Überwachungs- und Steuerschaltung (100) nach Anspruch 1, 2 oder 3, wobei das Koppelnetzwerk ferner umfasst:
ein drittes Schaltelement (26₂) mit einem Steueranschluss, einem ersten Leiteranschluss und einem zweiten Leiteranschluss, wobei der erste Leiteranschluss des dritten Schaltelements mit dem zweiten Leiteranschluss des Abtastschaltelements gekoppelt ist; und
ein viertes Schaltelement (28₂) mit einem Steueranschluss, einem ersten Leiteranschluss und einem zweiten Leiteranschluss, wobei der erste Leiteranschluss des vierten Schaltelements (28₂) mit dem zweiten Leiteranschluss des dritten Schaltelements (26₂) gekoppelt ist.

5. Überwachungs- und Steuerschaltung (100, 200) nach Anspruch 1, 2, 3 oder 4, wobei das Ausgleichsschaltelement umfasst:
einen ersten Transistor mit einer Steuerelektrode und ersten und zweiten stromführenden Elektroden, wobei das Abtastschaltelement einen zweiten Transistor mit einer Steuerelektrode und ersten und zweiten stromführenden Elektroden umfasst, wobei das erste Impedanzelement einen ersten Widerstand umfasst, das zweite Impedanzelement einen zweiten Widerstand umfasst und das erste Energiespeicherelement einen ersten Kondensator (36ₘ) umfasst.

6. Überwachungs- und Steuerschaltung (100) nach Anspruch 4, wobei die Filterschaltung (22ₘ) ferner umfasst:
den ersten Anschluss des zweiten Impedanzelements (34₂), der gemeinsam mit dem zweiten Leiteranschluss des Abtastschaltelements (28₁) und dem ersten Leiteranschluss des dritten Schaltelements (26₂) gekoppelt ist;
ein drittes Impedanzelement (34ₙ) mit einem ersten und zweiten Anschluss, wobei der erste Anschluss des dritten Impedanzelements (34ₙ) mit dem zweiten Leiteranschluss des vierten Schaltelements (28₂) gekoppelt ist; und
ein zweites Energiespeicherelement (36₂) mit ersten und zweiten Anschlüssen, wobei der erste Anschluss des zweiten Energiespeicherelements mit dem zweiten Anschluss des zweiten Impedanzelements (34₂), dem zweiten Leiteranschluss des Abtastschaltelements (28₁) und dem ersten Leiteranschluss des dritten Schaltelements (26₂) gekoppelt ist und der zweite Anschluss des zweiten Energiespeicherelements mit dem gemeinsam verbundenen zweiten Leiteranschluss des dritten Schaltelements und dem ersten Leiteranschluss des vierten Schaltelements gekoppelt ist.

7. Überwachungs- und Steuerschaltung (100) nach Anspruch 6, wobei das dritte Schaltelement (26₂) einen dritten Transistor mit einer Steuerelektrode und ersten und zweiten stromführenden Elektroden umfasst, das vierte Schaltelement (28₂) einen vierten Transistor mit einer Steuerelektrode und ersten und zweiten stromführenden Elektroden umfasst; und
das dritte Impedanzelement einen dritten Widerstand umfasst, und das zweite Energiespeicherelement einen zweiten Kondensator (36₂) umfasst.

## Revendications

1. Circuit de surveillance et de commande (100), comprenant :
un réseau de commutation (16ₙ) ayant des première, deuxième et troisième bornes, le réseau de commutation (16ₙ) comprenant :
un élément de commutation d'équilibrage (26ₘ) ayant une borne de commande, une première borne de conduction et une deuxième borne de conduction, la première borne de conduction de l'élément de commutation d'équilibrage servant de première borne du réseau de commutation ; et
un élément de commutation d'échantillonnage (28ₘ) ayant une borne de commande, une première borne de conduction et une deuxième borne de conduction, la première borne de conduction de l'élément de commutation d'échantillonnage étant couplée à la deuxième borne de conduction de l'élément de commutation d'équilibrage, le circuit de surveillance et de commande comprenant en outre :
un circuit de filtrage (22ₘ) ayant des première et deuxième bornes d'entrée et des première, deuxième et troisième bornes de sortie, la première borne de sortie étant couplée à la première borne du réseau de commutation et la troisième borne de sortie couplée à la troisième borne du réseau de commutation, le circuit de filtrage (22ₘ) comprenant :
un premier élément de stockage d'énergie (36ₘ) ayant des première et deuxième bornes, la deuxième borne du premier élément de stockage d'énergie servant de deuxième borne de sortie du circuit de filtrage, dans lequel la deuxième borne du premier élément de stockage d'énergie est connectée en commun à la deuxième borne de conduction de l'élément de commutation d'équilibrage et à la première borne de conduction de l'élément de commutation d'échantillonnage ;
un premier élément d'impédance (34ₘ) ayant des première et deuxième bornes, la première borne du premier élément d'impédance servant de première borne d'entrée du circuit de filtrage et la deuxième borne du premier élément d'impédance étant couplée à la première borne du premier élément de stockage d'énergie et servant de première borne de sortie du circuit de filtrage ; et
un deuxième élément d'impédance (34₍ₘ₊₁₎) ayant des première et deuxième bornes, la première borne du deuxième élément d'impédance servant de deuxième borne d'entrée du circuit de filtrage et la deuxième borne du deuxième élément d'impédance étant couplée à la deuxième borne de conduction de l'élément de commutation d'échantillonnage et formant la troisième borne de sortie du circuit de filtrage ;
dans lequel la première borne d'entrée du circuit de filtrage (22ₘ) est configurée pour être connectée à une première borne d'une cellule d'alimentation et la deuxième borne d'entrée du circuit de filtrage (22ₘ) est configurée pour être connectée à une deuxième borne de la cellule d'alimentation.

2. Circuit de surveillance et de commande (100) selon la revendication 1, dans lequel l'élément de commutation d'échantillonnage (28ₘ) est configuré pour conduire un courant d'équilibrage ou commander un élément capable de conduire le courant d'équilibrage.

3. Circuit de surveillance et de commande (100) selon la revendication 1 ou 2, dans lequel le premier élément d'impédance (34ₘ) est couplé en série avec l'élément de commutation d'équilibrage (26ₘ).

4. Circuit de surveillance et de commande (100) selon les revendications 1, 2 ou 3, dans lequel le réseau de commutation comprend en outre :
un troisième élément de commutation (26₂) ayant une borne de commande, une première borne de conduction et une deuxième borne de conduction, la première borne de conduction du troisième élément de commutation étant couplée à la deuxième borne de conduction de l'élément de commutation d'échantillonnage ; et
un quatrième élément de commutation (28₂) ayant une borne de commande, une première borne de conduction et une deuxième borne de conduction, la première borne de conduction du quatrième élément de commutation (28₂) étant couplée à la deuxième borne de conduction du troisième élément de commutation (26₂).

5. Circuit de surveillance et de commande (100, 200) selon les revendications 1, 2, 3 ou 4, dans lequel l'élément de commutation d'équilibrage comprend :
un premier transistor ayant une électrode de commande et des première et deuxième électrodes porteuses de courant, l'élément de commutation d'échantillonnage comprend un deuxième transistor ayant une électrode de commande et des première et deuxième électrodes porteuses de courant, le premier élément d'impédance comprend une première résistance, le deuxième élément d'impédance comprend une deuxième résistance et le premier élément de stockage d'énergie comprend un premier condensateur (36ₘ).

6. Circuit de surveillance et de commande (100) selon la revendication 4, dans lequel le circuit de filtrage (22ₘ) comprend en outre :
la première borne du deuxième élément d'impédance (34₂) couplée en commun à la deuxième borne de conduction de l'élément de commutation d'échantillonnage (28₁) et la première borne de conduction du troisième élément de commutation (26₂) ;
un troisième élément d'impédance (34ₙ) ayant des première et deuxième bornes, la première borne du troisième élément d'impédance (34ₙ) étant couplée à la deuxième borne de conduction du quatrième élément de commutation (28₂) ; et
un deuxième élément de stockage d'énergie (36₂) ayant des première et deuxième bornes, la première borne du deuxième élément de stockage d'énergie étant couplée à la deuxième borne du deuxième élément d'impédance (34₂), la deuxième borne de conduction de l'élément de commutation d'échantillonnage (28₁) et la première borne de conduction du troisième élément de commutation (26₂) et la deuxième borne du deuxième élément de stockage d'énergie étant couplée à la deuxième borne de conduction connectée en commun du troisième élément de commutation et la première borne de conduction du quatrième élément de commutation.

7. Circuit de surveillance et de commande (100) selon la revendication 6, dans lequel le troisième élément de commutation (26₂) comprend un troisième transistor ayant une électrode de commande et des première et deuxième électrodes porteuses de courant, le quatrième élément de commutation (28₂) comprend un quatrième transistor ayant une électrode de commande et des première et deuxième électrodes porteuses de courant ; et
le troisième élément d'impédance comprend une troisième résistance et le deuxième élément de stockage d'énergie comprend un deuxième condensateur (36₂).
